(19) **Europäisches Patentamt / European Patent Office / Office européen des brevets**

(11) **EP 4 020 374 B1**

(12) # EUROPEAN PATENT SPECIFICATION

(45) Date of publication and mention
of the grant of the patent:
**26.03.2025 Bulletin 2025/13**

(21) Application number: **20856883.2**

(22) Date of filing: **17.08.2020**

(51) International Patent Classification (IPC):
**G06V 10/56** (2022.01)    **G06T 5/94** (2024.01)
**G06V 10/60** (2022.01)    **G06V 40/16** (2022.01)
**G06T 5/60** (2024.01)

(52) Cooperative Patent Classification (CPC):
**G06T 5/94; G06T 5/60; G06V 10/56; G06V 10/60; G06V 40/161;** G06T 2207/10016;
G06T 2207/20064; G06T 2207/20076;
G06T 2207/20081; G06T 2207/20084;
G06T 2207/30201

(86) International application number:
**PCT/CN2020/109636**

(87) International publication number:
**WO 2021/036853 (04.03.2021 Gazette 2021/09)**

(54) **IMAGE PROCESSING METHOD AND ELECTRONIC APPARATUS**

BILDVERARBEITUNGSVERFAHREN UND ELEKTRONISCHE VORRICHTUNG

PROCÉDÉ DE TRAITEMENT D'IMAGE ET APPAREIL ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2019 CN 201910819830**

(43) Date of publication of application:
**29.06.2022 Bulletin 2022/26**

(73) Proprietor: **Huawei Technologies Co., Ltd.**
**Longgang District**
**Shenzhen,**
**Guangdong 518129 (CN)**

(72) Inventors:
• **CHEN, Yukuai**
**Shenzhen, Guangdong 518129 (CN)**
• **CHEN, Shuai**
**Shenzhen, Guangdong 518129 (CN)**
• **JIA, Zhiping**
**Shenzhen, Guangdong 518129 (CN)**

• **MIAO, Lei**
**Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(56) References cited:
CN-A- 105 530 434    CN-A- 107 093 168
CN-A- 107 545 536    CN-A- 107 862 658
CN-A- 108 447 026    CN-A- 108 665 408
CN-A- 108 765 352    CN-A- 109 255 763
JP-A- 2007 235 369    US-A1- 2018 350 046

• SILVA ET AL: "Deeplab Image Semantic Segmentation Network - Thalles' blog", 29 January 2018 (2018-01-29), XP055918895, Retrieved from the Internet <URL:https://sthalles.github.io/deep_segmentation_network/> [retrieved on 20220509]

**Description**

(excised)

**TECHNICAL FIELD**

Embodiments of this application relate to the field of information processing technologies, and in particular, to an image processing method and an electronic device.

**BACKGROUND**

With rapid development of digital technologies and image processing technologies, increasingly more people expect that their selfies, photos taken with a friend, or the like present a better effect through image processing, and in particular, expect that a face status presentation effect becomes better.

In an existing image processing method, an analysis result of an age, a gender, and a region of a person in an image is mainly relied on to complete face skin beautification, including skin smoothing, beautification, face slimming, making up, and the like. However, this method is based on only simple objective attribute information of a person in an image. A skin beautification manner in the method is fixed, and a skin beautification effect that can be obtained is limited.

CN 108 765 352 A discloses an image adjusting method. It includes the steps of analyzing an image to obtain characteristics of a user in the image; determining an image adjustment parameter based on the characteristics of the user; obtaining a correction parameter; changing the image adjustment parameter based on the correction parameter; and performing image processing on an area corresponding to the user in the image based on the changed image adjustment parameter.

**SUMMARY**

Embodiments of this application provide an image processing method, to comprehensively analyze photographing background information of a face image, face brightness distribution information, face makeup information, and the like, so as to purposefully perform skin beautification processing on the face image.

To achieve the foregoing objective, the following technical solutions are used in embodiments of this application. The invention is defined in the independent claims. Advantageous features are defined in the dependent claims.

According to a first aspect, an image processing method is provided. The method may be applied to an electronic device, and the method may include: The electronic device obtains photographing background information of a first image, where the first image includes a face image; the electronic device recognizes brightness information and makeup information that are of a face corresponding to the face image in the first image; and the electronic device performs, based on the photographing background information of the first image and the brightness information and the makeup information that are of the face corresponding to the face image in the first image, skin beautification processing on the face corresponding to the face image.

According to the technical solution provided in the first aspect, the first image including the face image is analyzed in a plurality of directions, including recognizing the photographing background information of the first image and the brightness information and the makeup information that are of the face, so that skin beautification processing can be purposefully performed on the face image comprehensively based on specific background information of the image, actual brightness distribution of the face, and actual makeup of the face. Therefore, a better face status of a person in a person image is presented, and user experience is better.

With reference to the first aspect, in a first possible implementation, that the electronic device recognizes brightness information of a face corresponding to the face image in the first image may include: The electronic device recognizes a face area in the first image, and the electronic device determines brightness information of each pixel in the face area based on a pixel value of the pixel in the face area. The pixel value of each pixel in the face area is analyzed to determine the brightness information of the pixel in the face area, so that brightness of each pixel in the face area can be obtained. This helps further determine an area with normal brightness and an area with insufficient brightness that are in the face area, so as to purposefully perform brightness processing on the face area.

With reference to the first aspect and the first possible implementation of the first aspect, in a second possible implementation, a method for recognizing, by the electronic device, the makeup information of the face corresponding to the face image in the first image may include: The electronic device classifies makeup in the face area by using a classification network, and outputs each makeup label and a probability corresponding to each makeup label, where a probability corresponding to each type of makeup is used to represent the makeup information of the face corresponding to the face image and the probability of each makeup label. The makeup in the face area is determined by using a trained makeup classification network, so as to purposefully perform makeup processing on the face area.

With reference to the second possible implementation of the first aspect, in a third possible implementation, the classification network is at least any one of a visual geometry group VGG, a residual network Resnet, or a lightweight neural network. The classification network is used to recognize the makeup in the face area, so that a speed of makeup recognition in the face area can be improved, and load of a processor can be reduced.

With reference to the first aspect and the first to the third possible implementations of the first aspect, in a fourth possible implementation, the first image may be a preview image in a camera of the electronic device; or the first image may be a picture stored in the electronic device; or the first image may be a picture obtained by the electronic device from another device. Regardless of an existing picture (including a picture stored in the electronic device and a picture obtained by the electronic device from a third party) or a preview image in the electronic device, image beautification processing can be performed by using the image processing method provided in this application.

With reference to the fourth possible implementation of the first aspect, in a fifth possible implementation, if the first image is the preview image in the camera of the electronic device, that the electronic device performs, based on the photographing background information of the first image and the brightness information and the makeup information that are of the face corresponding to the face image in the first image, skin beautification processing on the face corresponding to the face image may include: The electronic device determines a photographing parameter based on the photographing background information of the first image and the brightness information and the makeup information that are of the face corresponding to the face image in the first image; and the electronic device photographs, in response to a first operation and by using the determined photographing parameter, a picture corresponding to the preview image, where the first operation is used to indicate to perform photographing. For the preview image, the image processing method provided in this application may support photographing a preview picture based on the determined photographing parameter, to provide better photographing experience to a user.

With reference to the fourth possible implementation of the first aspect, in a sixth possible implementation, if the first image is the picture stored in the electronic device or the first image is the picture obtained by the electronic device from another device, that the electronic device performs, based on the photographing background information of the first image and the brightness information and the makeup information that are of the face corresponding to the face image in the first image, skin beautification processing on the face corresponding to the face image may include: The electronic device determines a skin beautification parameter based on the photographing background information of the first image and the brightness information and the makeup information that are of the face corresponding to the face image in the first image; and the electronic device performs, based on the determined skin beautification parameter, skin beautification processing on the face corresponding to the face image in the first image. For the existing picture, the image processing method provided in this application may support performing beautification processing on the picture based on the determined skin beautification parameter, to provide better image beautification experience to a user.

With reference to the sixth possible implementation of the first aspect, in a seventh possible implementation, the skin beautification parameter may include a brightness parameter and a makeup parameter that are of each pixel in the face area. When skin beautification processing is performed on the face area, the image processing method provided in this application may support performing brightness processing and makeup processing on the face area, and the skin beautification processing may be refined to each pixel.

With reference to the first aspect and the first to the seventh possible implementations of the first aspect, in an eighth possible implementation, the image processing method provided in this application may further include: If the electronic device determines that the first image includes at least two face images, the electronic device determines a relationship between persons corresponding to the at least two face images. Then the electronic device may adjust a style of the first image based on the determined relationship between the persons corresponding to the at least two face images. The adjusting a style of the first image includes adjusting background color of the first image and/or adjusting a background style of the first image. When the first image includes a plurality of faces, a background of the first image may be adjusted by analyzing a relationship between persons corresponding to the plurality of faces, including adjusting background color and/or adjusting a style, so that the background better matches the relationship between the persons, thereby obtaining better photographing experience or image beautification experience.

With reference to the first aspect and the first to the eighth possible implementations of the first aspect, in a ninth possible implementation, the image processing method provided in this application may further include: The electronic device recognizes at least one of a gender attribute, a race attribute, an age attribute, and an expression attribute that correspond to the face image in the first image. The foregoing attribute of the face is obtained, so that skin beautification processing can be purposefully performed on the face area based on the foregoing face attribute, thereby obtaining better photographing experience or image beautification experience.

With reference to the ninth possible implementation of the first aspect, in a tenth possible implementation, that the electronic device performs, based on the photographing background information of the first image and the brightness information and the makeup information that are of the face corresponding to the face image in the first image, skin beautification processing on the face corresponding to the face image may include: The electronic device performs, based on the photographing background information of the first image, the brightness information and the makeup information that are of the face corresponding to the face image in the first image, and at least one of the gender attribute, the race attribute, the age attribute, and the expression attribute that correspond to the face image in the first image, skin beautification processing on the face corresponding to the face image.

According to a second aspect, an electronic device is provided. The electronic device may include: an information obtaining unit, configured to obtain photographing background information of a first image, where the first image includes a face image; an image analyzing unit, configured to recognize brightness information and makeup information that are of a face corresponding to the face image in the first image; and an image processing unit, configured to perform, based on the photographing background information of the first image and the brightness information and the makeup information that are of the face corresponding to the face image in the first image, skin beautification processing on the face corresponding to the face image.

According to the technical solution provided in the second aspect, the first image including the face image is analyzed in a plurality of directions, including recognizing the photographing background information of the first image and the brightness information and the makeup information that are of the face, so that skin beautification processing can be purposefully performed on the face image comprehensively based on specific background information of the image, actual brightness distribution of the face, and actual makeup of the face. Therefore, a better face status of a person in a person image is presented, and user experience is better.

With reference to the second aspect, in a first possible implementation, that the image analyzing unit recognizes brightness information of a face corresponding to the face image in the first image may include the following: The image analyzing unit recognizes a face area in the first image, and the image analyzing unit determines brightness information of each pixel in the face area based on a pixel value of the pixel in the face area. The pixel value of each pixel in the face area is analyzed to determine the brightness information of the pixel in the face area, so that brightness of each pixel in the face area can be obtained. This helps further determine an area with normal brightness and an area with insufficient brightness that are in the face area, so as to purposefully perform brightness processing on the face area.

With reference to the second aspect and the first possible implementation of the second aspect, in a second possible implementation, that the image analyzing unit recognizes the makeup information of the face corresponding to the face image in the first image may include the following: The image analyzing unit classifies makeup in the face area by using a classification network, and outputs each makeup label and a probability corresponding to each makeup label, where a probability corresponding to each type of makeup is used to represent the makeup information of the face corresponding to the face image and the probability of each makeup label. The makeup in the face area is determined by using a trained makeup classification network, so as to purposefully perform makeup processing on the face area.

With reference to the second possible implementation of the second aspect, in a third possible implementation, the classification network is at least any one of a visual geometry group VGG, a residual network Resnet, or a lightweight neural network. The classification network is used to recognize the makeup in the face area, so that a speed of makeup recognition in the face area can be improved, and load of a processor can be reduced.

With reference to the second aspect and the first to the third possible implementations of the second aspect, in a fourth possible implementation, the first image may be a preview image in a camera of the electronic device; or the first image may be a picture stored in the electronic device; or the first image may be a picture obtained by the electronic device from another device. Regardless of an existing picture (including a picture stored in the electronic device and a picture obtained by the electronic device from a third party) or a preview image in the electronic device, image beautification processing can be performed by using the image processing method provided in this application.

With reference to the fourth possible implementation of the second aspect, in a fifth possible implementation, if the first image is the preview image in the camera of the electronic device, that the image processing unit performs, based on the photographing background information of the first image and the brightness information and the makeup information that are of the face corresponding to the face image in the first image, skin beautification processing on the face corresponding to the face image may include the following: The image processing unit determines a photographing parameter based on the photographing background information of the first image and the brightness information and the makeup information that are of the face corresponding to the face image in the first image; and the image processing unit photographs, in response to a first operation and by using the determined photographing parameter, a picture corresponding to the preview image, where the first operation is used to indicate to perform photographing. For the preview image, the image processing method provided in this application may support photographing a preview picture based on the determined photographing parameter, to provide better photographing experience to a user.

With reference to the fourth possible implementation of the second aspect, in a sixth possible implementation, if the first image is the picture stored in the electronic device or the first image is the picture obtained by the electronic device from another device, that the image processing unit performs, based on the photographing background information of the first image and the brightness information and the makeup information that are of the face corresponding to the face image in the first image, skin beautification processing on the face corresponding to the face image may include the following: The image processing unit determines a skin beautification parameter based on the photographing background information of the first image and the brightness information and the makeup information that are of the face corresponding to the face image in the first image; and the image processing unit performs, based on the determined skin beautification parameter, skin beautification processing on the face corresponding to the face image in the first image. For the existing picture, the image processing method provided in this application may support performing beautification processing on the picture based on the determined skin beautification parameter, to provide better image beautification experience to a user.

With reference to the sixth possible implementation of the second aspect, in a seventh possible implementation, the skin beautification parameter may include a brightness parameter and a makeup parameter that are of each pixel in the face area. When skin beautification processing is performed on the face area, the image processing method provided in this application may support performing brightness processing and makeup processing on the face area, and the skin beautification processing may be refined to each pixel.

With reference to the second aspect and the first to the seventh possible implementations of the second aspect, in an eighth possible implementation, the image analyzing unit is further configured to analyze a quantity of face images included in the first image. If the image analyzing unit determines that the first image includes at least two face images, the image analyzing unit is further configured to determine a relationship between persons corresponding to the at least two face images. Then the image processing unit is further configured to adjust a style of the first image based on the determined relationship between the persons corresponding to the at least two face images, where the adjusting a style of the first image includes adjusting background color of the first image and/or adjusting a background style of the first image. When the first image includes a plurality of faces, a background of the first image may be adjusted by analyzing a relationship between persons corresponding to the plurality of faces, including adjusting background color and/or adjusting a style, so that the background better matches the relationship between the persons, thereby obtaining better photographing experience or image beautification experience.

With reference to the second aspect and the first to the eighth possible implementations of the second aspect, in a ninth possible implementation, the image analyzing unit is further configured to recognize at least one of a gender attribute, a race attribute, an age attribute, and an expression attribute that correspond to the face image in the first image. The foregoing attribute of the face is obtained, so that skin beautification processing can be purposefully performed on the face area based on the foregoing face attribute, thereby obtaining better photographing experience or image beautification experience.

With reference to the ninth possible implementation of the second aspect, in a tenth possible implementation, that the image processing unit performs, based on the photographing background information of the first image and the brightness information and the makeup information that are of the face corresponding to the face image in the first image, skin beautification processing on the face corresponding to the face image may include the following: The image processing unit performs, based on the photographing background information of the first image, the brightness information and the makeup information that are of the face corresponding to the face image in the first image, and at least one of the gender attribute, the race attribute, the age attribute, and the expression attribute that correspond to the face image in the first image, skin beautification processing on the face corresponding to the face image.

According to a third aspect, an electronic device is provided. The electronic device may include: a memory, configured to store computer program code, where the computer program code includes instructions; a radio frequency circuit, configured to send and receive a wireless signal; and a processor, configured to execute the instructions, so that the electronic device obtains photographing background information of a first image, where the first image includes a face image; recognizes brightness information and makeup information that are of a face corresponding to the face image in the first image; and performs, based on the photographing background information of the first image and the brightness information and the makeup information that are of the face corresponding to the face image in the first image, skin beautification processing on the face corresponding to the face image.

According to the technical solution provided in the third aspect, the first image including the face image is analyzed in a plurality of directions, including recognizing the photographing background information of the first image and the brightness information and the makeup information that are of the face, so that skin beautification processing can be purposefully performed on the face image comprehensively based on specific background information of the image, actual brightness distribution of the face, and actual makeup of the face. Therefore, a better face status of a person in a person image is presented, and user experience is better.

With reference to the third aspect, in a first possible implementation, that the electronic device recognizes the brightness information of the face corresponding to the face image in the first image may include the following: The electronic device recognizes a face area in the first image, and determines brightness information of each pixel in the face area based on a pixel value of the pixel in the face area. The pixel value of each pixel in the face area is analyzed to determine the brightness information of the pixel in the face area, so that brightness of each pixel in the face area can be obtained. This helps further determine an area with normal brightness and an area with insufficient brightness that are in the face area, so as to purposefully perform brightness processing on the face area.

With reference to the third aspect and the first possible implementation of the third aspect, in a second possible implementation, a method for recognizing, by the electronic device, the makeup information of the face corresponding to the face image in the first image may include the following: The electronic device classifies makeup in the face area by using a classification network, and outputs each makeup label and a probability corresponding to each makeup label, where a probability corresponding to each type of makeup is used to represent the makeup information of the face corresponding to the face image and the probability of each makeup label. The makeup in the face area is determined by using a trained makeup classification network, so as to purposefully perform makeup processing on the face area.

With reference to the second possible implementation of the third aspect, in a third possible implementation, the classification network is at least any one of a visual geometry group VGG, a residual network Resnet, or a lightweight neural network. The classification network is used to recognize the makeup in the face area, so that a speed of makeup recognition in the face area can be improved, and load of a processor can be reduced.

With reference to the third aspect and the first to the third possible implementations of the third aspect, in a fourth possible implementation, the first image may be a preview image in a camera of the electronic device; or the first image may be a picture stored in the electronic device; or the first image may be a picture obtained by the electronic device from another device. Regardless of an existing picture (including a picture stored in the electronic device and a picture obtained by the electronic device from a third party) or a preview image in the electronic device, image beautification processing can be performed by using the image processing method provided in this application.

With reference to the fourth possible implementation of the third aspect, in a fifth possible implementation, if the first image is the preview image in the camera of the electronic device, that the electronic device performs, based on the photographing background information of the first image and the brightness information and the makeup information that are of the face corresponding to the face image in the first image, skin beautification processing on the face corresponding to the face image may include the following: The electronic device determines a photographing parameter based on the photographing background information of the first image and the brightness information and the makeup information that are of the face corresponding to the face image in the first image; and photographs, in response to a first operation and by using the determined photographing parameter, a picture corresponding to the preview image, where the first operation is used to indicate to perform photographing. For the preview image, the image processing method provided in this application may support photographing a preview picture based on the determined photographing parameter, to provide better photographing experience to a user.

With reference to the fourth possible implementation of the third aspect, in a sixth possible implementation, if the first image is the picture stored in the electronic device or the first image is the picture obtained by the electronic device from another device, that the electronic device performs, based on the photographing background information of the first image and the brightness information and the makeup information that are of the face corresponding to the face image in the first image, skin beautification processing on the face corresponding to the face image may include the following: The electronic device determines a skin beautification parameter based on the photographing background information of the first image and the brightness information and the makeup information that are of the face corresponding to the face image in the first image; and performs, based on the determined skin beautification parameter, skin beautification processing on the face corresponding to the face image in the first image. For the existing picture, the image processing method provided in this application may support performing beautification processing on the picture based on the determined skin beautification parameter, to provide better image beautification experience to a user.

With reference to the sixth possible implementation of the third aspect, in a seventh possible implementation, the skin beautification parameter may include a brightness parameter and a makeup parameter that are of each pixel in the face area. When skin beautification processing is performed on the face area, the image processing method provided in this application may support performing brightness processing and makeup processing on the face area, and the skin beautification processing may be refined to each pixel.

With reference to the third aspect and the first to the seventh possible implementations of the third aspect, in an eighth possible implementation, the processor is further configured to execute the instructions, so that the electronic device determines that the first image includes at least two face images. The electronic device determines a relationship between persons corresponding to the at least two face images, and adjusts a style of the first image based on the determined relationship between the persons corresponding to the at least two face images, where the adjusting a style of the first image includes adjusting background color of the first image and/or adjusting a background style of the first image. When the first image includes a plurality of faces, a background of the first image may be adjusted by analyzing a relationship between persons corresponding to the plurality of faces, including adjusting background color and/or adjusting a style, so that the background better matches the relationship between the persons, thereby obtaining better photographing experience or image beautification experience.

With reference to the third aspect and the first to the eighth possible implementations of the third aspect, in a ninth possible implementation, the processor is further configured to execute the instructions, so that the electronic device recognizes at least one of a gender attribute, a race attribute, an age attribute, and an expression attribute that correspond to the face image in the first image. The foregoing attribute of the face is obtained, so that skin beautification processing can be purposefully performed on the face area based on the foregoing face attribute, thereby obtaining better photographing experience or image beautification experience.

With reference to the ninth possible implementation of the third aspect, in a tenth possible implementation, that the electronic device performs, based on the photographing background information of the first image and the brightness information and the makeup information that are of the face corresponding to the face image in the first image, skin beautification processing on the face corresponding to the face image may include the following: The electronic device performs, based on the photographing background information of the first image, the brightness information and the makeup information that are of the face corresponding to the face image in the first image, and at least one of the gender attribute, the race attribute, the age attribute, and the expression attribute that correspond to the face image in the first image, skin beautification processing on the face corresponding to the face image.

It should be noted that the image processing method provided in the first aspect may be performed by an image processing apparatus. The image processing apparatus may be a controller or a processor that is in an electronic device and that is configured to perform the image processing method. The image processing apparatus may be a chip in the electronic device, or the image processing apparatus may be an independent device or the like and is configured to perform the image processing method.

According to a fourth aspect, a computer-readable storage medium is provided. The computer-readable storage medium stores computer execution instructions, and when the computer execution instructions are executed by a processor, the image processing method in any possible implementation of the first aspect is implemented.

According to a fifth aspect, a chip system is provided. The chip system may include a storage medium, configured to store instructions; and a processing circuit, configured to execute the instructions to implement the image processing method in any possible implementation of the first aspect. The chip system may include a chip, or may include a chip and another discrete device.

According to a sixth aspect, a computer program product is provided. The computer program product includes program instructions, and when the program instructions are run on a computer, the image processing method in any possible implementation of the first aspect is implemented. For example, the computer may be at least one storage node.

## BRIEF DESCRIPTION OF DRAWINGS

FIG. 1 is an example diagram of a first image according to an embodiment of this application;
FIG. 2 is a schematic diagram of a hardware structure of an electronic device according to an embodiment of this application;
FIG. 3 is an example diagram of feature extraction performed on a convolutional layer according to an embodiment of this application;
FIG. 4 is a first flowchart of an image processing method according to an embodiment of this application;
FIG. 5 is a schematic diagram of a working procedure of a convolutional neural network according to an embodiment of this application;
FIG. 6 is an example diagram of a connection between a convolutional layer and a pooling layer according to an embodiment of this application;
FIG. 7 is a diagram of several image processing examples according to an embodiment of this application;
FIG. 8 is an example diagram of photographing a preview image according to an embodiment of this application;
FIG. 9 is a second flowchart of an image processing method according to an embodiment of this application;
FIG. 10 is a schematic diagram of a method for determining a face included in a first image according to an embodiment of this application;
FIG. 11 is a third flowchart of an image processing method according to an embodiment of this application;
FIG. 12 is a diagram of an image processing example according to an embodiment of this application;
FIG. 13 is a diagram of another image processing example according to an embodiment of this application;
FIG. 14 is a fourth flowchart of an image processing method according to an embodiment of this application;
FIG. 15 is a fifth flowchart of an image processing method according to an embodiment of this application;
FIG. 16 is a sixth flowchart of an image processing method according to an embodiment of this application; and

FIG. 17 is a schematic diagram of a structure of an electronic device according to an embodiment of this application.

## DESCRIPTION OF EMBODIMENTS

Embodiments of this application provide an image processing method. Specifically, in the image processing method in embodiments of this application, photographing background information of a to-be-processed image (that is, a first image) including a face image, face brightness distribution information, and face makeup information are recognized, and an image beautification parameter is determined by combining the foregoing recognized information, to purposefully perform skin beautification on a face of a person image in the first image.

Face brightness means relative luminance of face color, and brightness is usually measured by a percentage ranging from 0% (black) to 100% (white).

For example, in the following scenarios, when the image processing method in embodiments of this application is used, the photographing background information of the first image, the face brightness distribution information, and face makeup information may be combined to purposefully perform skin beautification on a face of a person, thereby obtaining better user experience.

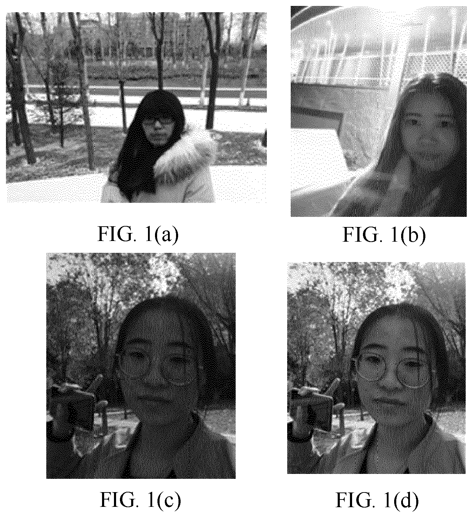

For example, as shown in FIG. 1(a), a photographing background in which a user is located is a snowy day, and a face of the user is relatively black. According to the image processing method in embodiments of this application, photographing background information of the picture, face brightness distribution information, and face makeup information may be comprehensively considered into skin beautification, to implement optimal matching between the face of the person and the background to a specific extent, so that the user has better skin beautification experience.

For another example, as shown in FIG. 1(b), a photographing background in which a user is located is a neon lamp at night, and in this environment, a face of the user is relatively yellow. According to the image processing method in embodiments of this application, photographing background information may be used to determine whether the relatively yellow face of the user is caused by the photographing background or skin color of the user. When it is determined that a change of the skin color of the user is affected by the photographing background, the skin color of the user may be purposefully adjusted, so that the user has better skin beautification experience.

For still another example, luminance in a face area is not uniform due to different light, different photographing angles, or shielding of a face by hair or a hat. As shown in FIG. 1(c), because a user is back to light and a partial area of a face is shielded by hair, luminance in a face area is not uniform in a photographed picture. According to the image processing method in embodiments of this application, impact of information, such as a photographing angle, face brightness distribution information, and a shielding object, on face presentation of the user may be comprehensively considered, to implement more refined skin beautification.

For still another example, as shown in FIG. 1(d), a face presentation effect is extremely poor in a natural look photo that is photographed by a user in environment in which light luminance is not uniform. According to the image processing method in embodiments of this application, impact of information, such as photographing background information, face brightness distribution information, and face makeup information, on face presentation of the user may be comprehensively considered, to implement more purposeful skin beautification.

The first image in embodiments of this application may be a photographed picture. For example, the first image may be a photo that is photographed by a user by using a camera of an electronic device, including a photo that is photographed by invoking a camera of a mobile phone by the user by using a specific application installed in the electronic device. For another example, the first image is a picture obtained by the electronic device from another place or a specific frame of image in a video, for example, a picture received by the user from a friend by using WeChat installed in the electronic device, or a picture downloaded by the user from the Internet by using the electronic device. The first image in embodiments of this application may alternatively be a preview image in the camera of the electronic device, or an image from another source. A source, a format, and an obtaining manner of the first image are not limited in embodiments of this application.

It should be noted that the electronic device in embodiments of this application may be a mobile phone, a computer, an application server; or may be another desktop device, a laptop device, a handheld device, a wearable device, or the like, for example, a tablet computer, a smart camera, a netbook, a personal digital assistant (Personal Digital Assistant, PDA), a smart watch, or an AR (augmented reality)/VR (virtual reality) device; or may be another server device or the like. A type of the electronic device is not limited in embodiments of this application.

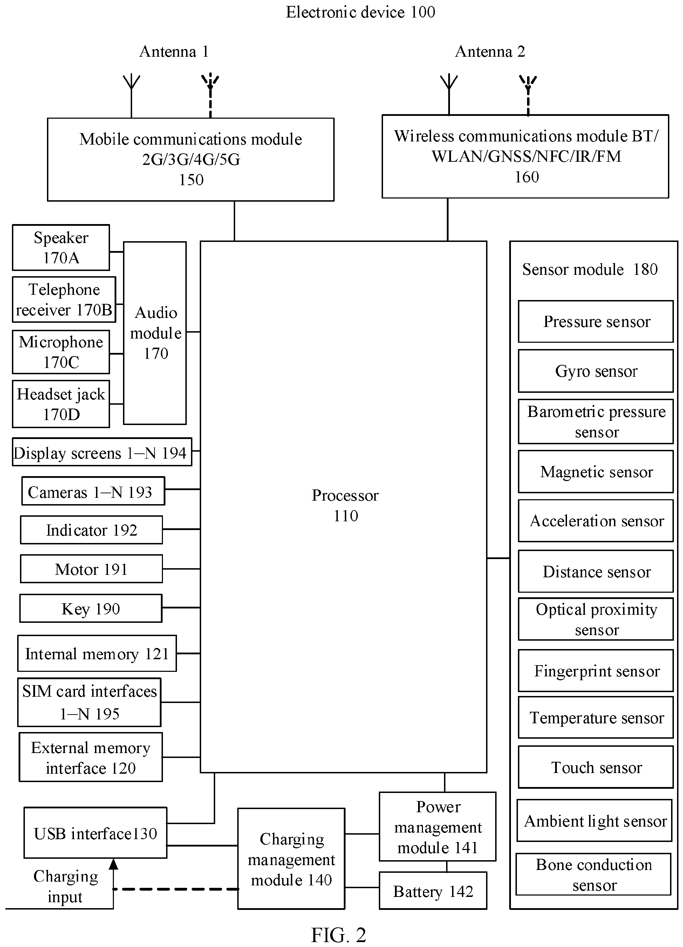

FIG. 2 is a schematic diagram of a hardware structure of an electronic device 100 according to an embodiment of this application. As shown in FIG. 2, the electronic device 100 may include a processor 110, a memory (including an external memory interface 120 and an internal memory 121), a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a telephone receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It can be understood that a structure shown in this embodiment of this application does not specifically limit the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural network processing unit NPU, and/or the like. Different processing units may be independent components, or may be integrated into one or more processors.

The controller may generate an operation control signal based on instruction operation code and a time sequence signal, to control instruction obtaining and instruction execution.

A memory may be further disposed in the processor 110, and is configured to store instructions and data. In some embodiments, the memory in the processor 110 is a cache. The memory may store an instruction or data that has been just used or cyclically used by the processor 110. If the processor 110 needs to use the instruction or the data again, the processor 110 may directly invoke the instruction or the data from the memory. This avoids repeated access, and reduces waiting time of the processor 110, and therefore system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive charging input from a charger. The charger may be a wireless charger, or may be a wired charger. In some embodiments of wired charging, the charging management module 140 may receive charging input from the wired charger by using the USB interface 130. In some embodiments of wireless charging, the charging management module 140 may receive wireless charging input by using a wireless charging coil of the electronic device 100. When charging the battery 142, the charging management module 140 may further supply power to the electronic device by using the power management module 141.

The power management module 141 is configured to connect the battery 142 and the charging management module 140 to the processor 110. The power management module 141 receives input of the battery 142 and/or the charging management module 140, and supplies power to the processor 110, the internal memory 121, the display screen 194, the camera 193, the wireless communications module 160, and the like. The power management module 141 may be further configured to monitor parameters such as a battery capacity, a battery cycle quantity, and a battery health status (electric leakage and impedance). In some other embodiments, the power management module 141 may be disposed in the processor 110. In some other embodiments, the power management module 141 and the charging management module 140 may be disposed in a same component.

A wireless communications function of the electronic device 100 may be implemented by using the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna in the electronic device 100 may be configured to cover a single communications frequency band or a plurality of communications frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communications module 150 may provide a solution for wireless communication including 2G/3G/4G/5G and the like applied to the electronic device 100. The mobile communications module 150 may include at least one filter, a switch, a power amplifier, a low noise amplifier (low noise amplifier, LNA), and the like. The mobile communications module 150 may receive an electromagnetic wave by using the antenna 1, perform processing such as filtering and amplification on the received electromagnetic wave, and transmit the electromagnetic wave to the modem processor for demodulation. The mobile communications module 150 may further amplify a signal modulated by the modem processor, convert the signal into an electromagnetic wave by using the antenna 1, and radiate the electromagnetic wave. In some embodiments, at least some functional modules of the mobile communications module 150 may be disposed in the processor 110. In some embodiments, at least some functional modules of the mobile communications module 150 may be disposed in a same component with at least some modules of the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (not limited to the speaker 170A, the telephone receiver 170B, and the like), or displays an image or a video by using the display screen 194. In some embodiments, the modem processor may be an independent component. In some other embodiments, the modem processor may be independent of the processor 110, and is disposed in a same component with the mobile communications module 150 or another functional module.

The wireless communications module 160 may provide a solution for wireless communication including a wireless local area network (WLAN) (such as a wireless fidelity (Wi-Fi) network), Bluetooth (BT), a global navigation satellite system (GNSS), frequency modulation (FM), a near field communication (NFC) technology, an infrared (IR) technology, and the like applied to the electronic device 100. The wireless communications module 160 may be one or more components integrated with at least one communication processing module. The wireless communications module 160 receives an electromagnetic wave by using the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, convert the signal into an electromagnetic wave by using the antenna 2, and radiate the electromagnetic wave.

In some embodiments, the antenna 1 and the mobile communications module 150 of the electronic device 100 are coupled, and the antenna 2 and the wireless communications module 160 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), Long Term Evolution (LTE), BT, GNSS, WLAN, NFC, FM, an IR technology, and/or the like. The GNSS may include a global positioning system (GPS), a global navigation satellite system (GLONASS), a BeiDou navigation satellite system (BDS), a quasi-zenith satellite system (QZSS), and/or a satellite based augmentation system ( SBAS).

The electronic device 100 implements a display function by using the GPU, the display screen 194, the application processor, and the like. The GPU is a microprocessor for image processing, and is connected to the display screen 194 and the application processor. The GPU is configured to perform mathematical and geometric calculation, and is used for graphics rendering. The processor 110 may include one or more GPUs that execute program instructions to generate or change display information. Specifically, in this embodiment of this application, the electronic device 100 may perform image processing on the first image by using the GPU.

The display screen 194 is configured to display an image, a video, and the like. The display screen 194 includes a display panel. The display panel may be a liquid crystal display (LCD), an organic light-emitting diode (OLED), an active-matrix organic light emitting diode (AMOLED), a flexible light-emitting diode (FLED), a Miniled, a MicroLed, a Micro-oLed, a quantum dot light emitting diode (QLED), or the like. In some embodiments, the electronic device 100 may include one or N display screens 194, where N is a positive integer greater than 1.

The electronic device 100 may implement a photographing function by using the ISP, the camera 193, the video codec, the GPU, the display screen 194, the application processor, and the like.

The ISP is configured to process data fed back by the camera 193. For example, during photographing, a shutter is turned on, and light is transmitted to a photosensitive element of the camera by using a lens, so that an optical signal is converted into an electrical signal, and the photosensitive element of the camera transmits the electrical signal to the ISP for processing, to convert the electrical signal into a macroscopic image. The ISP may further perform algorithm optimization on image noise, brightness, and complexion. The ISP may further optimize parameters such as exposure to a photographing scenario and color temperature. In some embodiments, the ISP may be disposed in the camera 193.

The camera 193 is configured to capture a static image or a video. An optical image of an object is generated by using the lens and is projected to the photosensitive element. The photosensitive element may be a charge-coupled device (CCD) or a complementary metal-oxide-semiconductor (CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to compress or decompress a digital video. The electronic device 100 can support one or more video codecs. In this way, the electronic device 100 can play or record videos in a plurality of encoding formats, for example, moving picture experts group (MPEG)-1, MPEG-2, MPEG-3, and MPEG-4.

The NPU is a neural-network processing unit, performs fast processing on input information by referring to a structure of a biological neural network, for example, by referring to a transmission mode between neurons in a human brain, and may further continuously perform self-learning. An application such as intelligent cognition of the electronic device 100 may be implemented by using the NPU, for example, face brightness analysis, photographing background analysis, face makeup analysis, face detection, and face attribute analysis. Specifically, in this embodiment of this application, the NPU may be understood as a unit integrated with a neural network. The NPU may send an analysis result of the NPU to the GPU, and the GPU performs image processing on the first image based on the analysis result.

The external memory interface 120 may be configured to connect to an external storage card such as a Micro SD card, to extend a storage capability of the electronic device 100. The external storage card communicates with the processor 110 by using the external memory interface 120, to implement a data storage function. For example, files such as music and a video are stored in the external storage card.

The internal memory 121 may be configured to store computer-executable program code, and the executable program code includes instructions. The internal memory 121 may include a program storage area and a data storage area. The program storage area may store an operating system, an application program required by at least one function (such as a sound playing function and an image playing function), and the like. The data storage area may store data (such as audio data and a phone book) and the like created during use of the electronic device 100. In addition, the internal memory 121 may include a high-speed random access memory, and may further include a non-volatile memory such as at least one magnetic disk storage component, a flash memory component, or a universal flash storage (universal flash storage, UFS). The processor 110 executes various functional applications and data processing of the terminal 100 by running the instructions stored in the internal memory 121 and/or instructions stored in the memory disposed in the processor.

The electronic device 100 may implement an audio function such as music playing and recording by using the audio module 170, the speaker 170A, the telephone receiver 170B, the microphone 170C, the headset jack 170D, the application processor, and the like.

The audio module 170 is configured to convert digital audio information into analog audio signal output, and is also configured to convert analog audio input into a digital audio signal. The audio module 170 may be further configured to encode and decode an audio signal.

The speaker 170A, also referred to as a "loudspeaker", is configured to convert an audio electrical signal into a sound signal. The electronic device 100 may be used to listen to music or listen to a handsfree call by using the speaker 170A.

The telephone receiver 170B, also referred to as an "earpiece", is configured to convert an audio electrical signal into a sound signal. When a call or voice information is listened to by using the electronic device 100, the telephone receiver 170B may be put close to a human ear to listen to voice.

The microphone 170C, also referred to as a "microphone" or "microphone", is configured to convert a sound signal into an electrical signal. When making a call or sending voice information, a user may make a sound by approaching a mouth to the microphone 170C, and input the sound signal to the microphone 170C. At least one microphone 170C may be disposed in the electronic device 100.

The headset jack 170D is configured to connect to a wired headset. The headset jack 170D may be the USB interface 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor is configured to perceive a pressure signal, and may convert the pressure signal into an electrical signal.

The barometric pressure sensor is configured to measure barometric pressure.

The gyro sensor may be configured to determine a motion posture of the electronic device 100. In some embodiments, angular velocities of the electronic device 100 around three axes (namely, an x-axis, a y-axis, and a z-axis) may be determined by using the gyro sensor.

The magnetic sensor includes a Hall effect sensor. The electronic device 100 may detect opening and closing of a flip leather cover by using the magnetic sensor.

The acceleration sensor may detect a value of an acceleration of the electronic device 100 in each direction (generally three axes). When the electronic device 100 is static, a value and a direction of gravity may be detected. The acceleration sensor may be further configured to recognize a posture of the electronic device, and is applied to applications such as horizontal and vertical screen switching and a pedometer.

The distance sensor is configured to measure a distance. The electronic device 100 may measure the distance by using infrared or a laser. In some embodiments, in a photographing scenario, the electronic device 100 may measure the distance by using the distance sensor, to implement fast focusing.

The optical proximity sensor may include, for example, a light emitting diode (LED) and an optical detector such as a photodiode. The light emitting diode may be an infrared light emitting diode. The electronic device 100 emits infrared light by using the light emitting diode. The electronic device 100 detects infrared reflected light from a nearby object by using the photodiode. When detecting sufficient reflected light, it may be determined that there is an object near the electronic device 100. When detecting insufficient reflected light, the electronic device 100 may determine that there is no object near the electronic device 100. The electronic device 100 may detect, by using the optical proximity sensor, that a user holds the electronic device 100 to approach an ear to make a call, to automatically turn off a screen to save power. The optical proximity sensor may also be used in a leather cover mode and a pocket mode to automatically unlock and lock the screen.

The ambient light sensor is configured to perceive ambient light brightness.

The fingerprint sensor is configured to collect a fingerprint. The electronic device 100 may use a feature of the collected fingerprint to implement fingerprint unlocking, access an application lock, take a photo by using the fingerprint, answer an incoming call by using the fingerprint, and so on.

The temperature sensor is configured to detect temperature. In some embodiments, the electronic device 100 performs a temperature processing policy by using the temperature detected by the temperature sensor.

The touch sensor is also referred to as a "touch component". The touch sensor (also referred to as a touch panel) may be disposed on the display screen 194, and the touch sensor and the display screen 194 form a touchscreen, which is also referred to as a "touchscreen". The touch sensor is configured to detect a touch operation performed on or near the touch sensor.

The bone conduction sensor may obtain a vibration signal. In some embodiments, the bone conduction sensor may obtain a vibration signal of a vibration bone of a vocal part of a human body. The bone conduction sensor may also be in contact with a pulse of the human body to receive a blood pressure beating signal.

The key 190 includes a power key, a volume key, and the like. The key 190 may be a mechanical key, or may be a touch key. The electronic device 100 may receive key input, and generate key signal input related to user setting and function control of the electronic device 100.

The motor 191 may generate a vibration prompt. The motor 191 may be used for a vibration prompt for an incoming call, or may be used for touch vibration feedback. For example, touch operations performed on different applications (for example, photographing and audio playing) may correspond to different vibration feedback effects. For touch operations performed on different areas of the display screen 194, the motor 191 may also correspond to different vibration feedback effects. Different application scenarios (for example, time reminding, information receiving, an alarm clock, and a game) may also correspond to different vibration feedback effects. Customization of a touch vibration feedback effect may also be supported.

The indicator 192 may be an indicator light, and may be configured to indicate a charging status and a battery level change, or may be configured to indicate a message, a missed call, a notification, or the like.

The SIM card interface 195 is configured to connect to a SIM card. The SIM card may be inserted into the SIM card interface 195 or plugged from the SIM card interface 195 to be in contact with or be separated from the electronic device 100. The electronic device 100 may support one or N SIM card interfaces, where N is a positive integer greater than 1. The SIM card interface 195 may support a Nano SIM card, a Micro SIM card, a SIM card, and the like. A plurality of cards may be simultaneously inserted into a same SIM card interface 195. The plurality of cards may be of a same type, or may be of different types. The SIM card interface 195 may also be compatible with different types of SIM cards. The SIM card interface 195 may also be compatible with an external storage card. The electronic device 100 interacts with a network by using the SIM card, to implement a call function, a data communication function, and the like. In some embodiments, the electronic device 100 uses an eSIM, namely, an embedded SIM card. The eSIM card may be embedded into the electronic device 100 and cannot be separated from the electronic device 100.

The image processing method in embodiments of this application may be implemented in an electronic device having the foregoing hardware structure or an electronic device having a similar structure. The image processing method provided in embodiments of this application is specifically described below by using an example in which the electronic device is a mobile phone.

It can be understood that in embodiments of this application, the mobile phone may perform some or all of steps in embodiments of this application, and these steps or operations are merely examples. In embodiments of this application, another operation or various operation variations may be performed. In addition, each step may be performed in an order different from that presented in embodiments of this application, and not all operations in embodiments of this application may be performed.

Referring to the following examples, the following several examples are several possible application examples of the image processing method in embodiments of this application.

Example 1: When a user performs photographing by using a camera of a mobile phone, in a preview interface, the mobile phone performs comprehensive analysis on information such as photographing background information, face brightness analysis information, and face makeup information that are of an image in the preview interface; and adjusts a photographing parameter of the camera based on a result of the comprehensive analysis. In this way, when the user taps a photographing button to photograph the image in the preview interface, a picture in which a person has a better face status is photographed based on an adjusted photographing parameter, and user experience is better.

The preview interface is an interface that is of a currently to-be-photographed picture and that is previewed after an electronic device starts a camera. After the electronic device starts the camera, a display screen of the electronic device displays a current preview interface.

Example 2: A user intercepts a specific frame of image of a star that is in a video and that is liked by the user, and performs image beautification on the frame of image by using image beautification software installed in a computer. Specifically, the image beautification software may perform comprehensive analysis on information such as photographing background information, face brightness distribution information, and face makeup information that are of the frame of image. Skin beautification is performed on a face of the star based on an adjustment parameter corresponding to a result of the comprehensive analysis.

Example 3: A user wants to perform skin beautification on a person in a picture photographed by the user. The user may use an image beautification application (Application, APP) installed in a mobile phone of the user to perform comprehensive analysis on information such as photographing background information, face brightness distribution information, and face makeup information that are of the picture. Skin beautification is performed on the person in the picture based on an adjustment parameter corresponding to a result of the comprehensive analysis.

It should be noted that Example 1, Example 2, and Example 3 are merely used as several examples to describe several possible applications of the image processing method in embodiments of this application. The image processing method in embodiments of this application may be further applied to another possible case. This is not limited in embodiments of this application.

In some embodiments, the mobile phone may perform deep learning on a large quantity of pictures by using an established neural network that simulates a human brain to perform analysis and learning, to obtain an artificial intelligence (artificial intelligence, AI) model. When recognizing information such as photographing background information, face brightness distribution information, and face makeup information of a first image, the neural network may perform pooling processing and feature analysis on the first image by simulating a mechanism of the human brain, and perform feature matching on the first image based on the AI model. The neural network is also referred to as an artificial neural network (Artificial Neural Networks, ANNs).

For example, in Example 1, the mobile phone may be integrated with the neural network, and complete the comprehensive analysis by using the neural network, to obtain the comprehensive analysis result. In Example 2 and Example 3, the image beautification software or the image beautification APP may complete the comprehensive analysis by using an application server of the image beautification software or the image beautification APP, to obtain the comprehensive analysis result. The application server of image beautification software or the image beautification APP may be integrated with the neural network.

For example, the neural network in embodiments of this application may be a convolutional neural network.

The convolutional neural network may include at least a data input layer, at least one convolutional layer, at least one pooling layer, and a fully connected layer. The data input layer is configured to perform preprocessing on to-be-processed data such as an obtained image, sound, and text. For example, the preprocessing includes mean removal, normalization, and principal component analysis (principal component analysis, PCA)/-whitening (whitening). The convolutional layer is configured to extract a feature. The pooling layer is configured to sample a feature, that is, replace an area with a value, which is mainly intended to reduce a degree of overfitting between a network training parameter and a model. The fully connected layer is configured to perform comprehensive analysis on the extracted feature to obtain an analysis result. As described above, the convolutional neural network may further include a trained AI model.

Convolution is an important operation in analysis mathematics. It is assumed that $f(x)$ and g(x) are two integrable functions on R. For each $x \in (-\infty, +\infty)$, h(x) exists, which is referred to as convolution of $f(x)$ and $g(x)$,

$$h(\mathrm{x}) = f(\mathrm{x}) * g(\mathrm{x}) = \int_{-\infty}^{+\infty} f(\tau) g(\mathrm{x}-\tau) \mathrm{d}\tau$$

where . In the convolutional neural network, that the convolutional layer extracts a feature may include the following: A filter $g(x)$ continuously moves on an input image $f(x)$

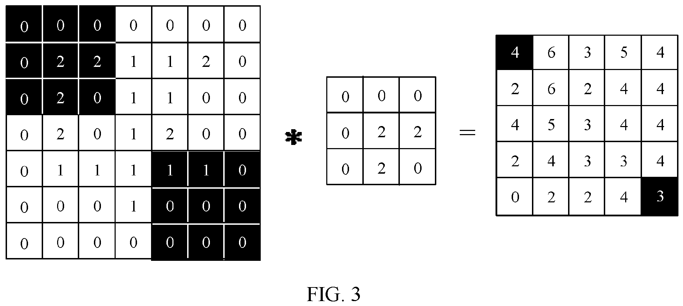

based on a step size to perform weighted summation, extracts feature information that is input to a feature matrix, and then performs data calculation on the feature matrix, as shown in FIG. 3.

In some embodiments, the convolutional neural network may further include an activation function layer, configured to perform a non-linear mapping on the feature extracted by the convolutional layer. For example, the activation function layer may use a rectified linear unit (The Rectified Linear Unit, ReLU), which is an activation function, to compress, to a specific fixed range, a result that is output by the convolutional layer. In this way, a value range may be kept controllable layer after layer. ReLU has features of fast convergence and a simple gradient.

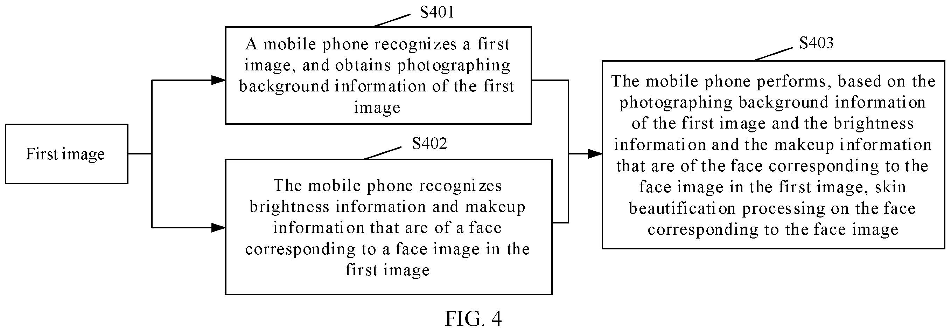

As shown in FIG. 4, the image processing method in embodiments of this application may include the following steps.

S401: A mobile phone recognizes a first image, and obtains photographing background information of the first image.

The first image includes at least one face. The photographing background information of the first image is used to indicate a photographing background of the first image.

For example, the photographing background of the first image may at least include at least one of the following several categories: weather (such as snowy or rainy), light (such as strong light, weak light, night, or dusk), and a scene (such as the seaside, a sand beach, at home, a cocktail party, a school, or a playground). In a possible implementation, the mobile phone may recognize the first image by using a scene recognition algorithm, and obtain the photographing background information of the first image.

For example, the mobile phone may perform deep learning on the first image by using a convolutional neural network, to obtain the photographing background information of the first image.

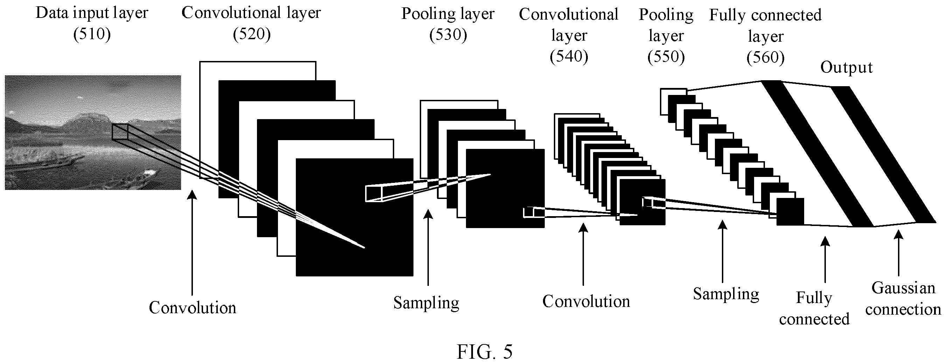

FIG. 5 is an example diagram of analyzing a first image by a convolutional neural network according to an embodiment of this application. As shown in FIG. 5, the convolutional neural network may include a data input layer 510, a convolutional layer 520, a pooling layer 530, a convolutional layer 540, a pooling layer 550, and a fully connected layer 560. The data input layer 510 is configured to obtain a first image and perform preprocessing on the first image. Then, a $28\times28$ image is obtained by performing convolution on a preprocessed image by the convolutional layer 520. Next, a $14\times14$ image is obtained by performing pooling on the $28\times28$ image by the pooling layer 530. Afterwards, a $10\times10$ image is obtained by performing convolution on the $14\times14$ image by the convolutional layer 540. Further, a $5\times5$ image is obtained by performing pooling on the $10\times10$ image by the pooling layer 550. The convolutional layer 520 may include six $5\times5$ convolutional cores. The convolutional layer 540 may include 16 $5\times5$ convolutional

cores. Finally, the $5\times5$ image obtained by the pooling layer 550 is processed by the fully connected layer 560 to obtain an output result, where the output result corresponds to a matching result in an AI model in a training set.

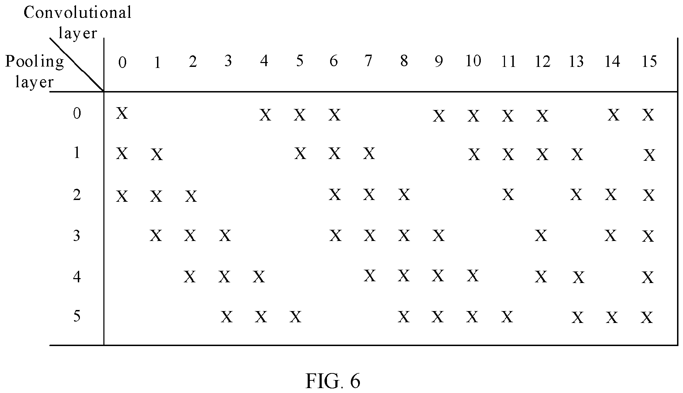

In FIG. 5, the pooling layer 530 and the convolutional layer 540 are not fully connected but are partially connected. For example, FIG. 6 is an example diagram of a connection between a convolutional layer and a pooling layer according to an embodiment of this application. For example, as shown in FIG. 6, a node 0 of the convolutional layer 540 is connected to a node 0, a node 1, and a node 2 of the pooling layer 530. A node 1 of the convolutional layer 540 is connected to the node 1, the node 2, and a node 3 of the pooling layer 530. A row represents a node of the convolutional layer 540, and a column represents a node of the pooling layer 530.

A plurality of times of convolution and filtering are performed on a feature extracted from the first image, and finally, a probability of matching between the photographing background of the first image and an AI model in the convolutional neural network is obtained through calculation by using the fully connected layer.

The training set may be pre-trained by using the convolutional neural network and fixed in the mobile phone before delivery of the mobile phone. Alternatively, a photo photographed by the mobile phone in a preset time period or a picture received or downloaded by the mobile phone in a preset time period may be used as the training set to perform personalized training on the convolutional neural network, so that accuracy of recognizing a photographing background by the convolutional neural network is improved. For example, a user frequently photographs a photo of a snow-covered landscape of a mountain, and the mobile phone continuously trains the training set by using the photo of the snow-covered landscape of the mountain photographed by the user, so that accuracy of a result of recognizing, by the mobile phone, a photographing background of the snow-covered landscape of the mountain is relatively high.

In a possible implementation, photographing background information finally output by the convolutional neural network may include at least one photographing background category. If a photographing background recognition result includes N photographing background categories, the N photographing background categories may be ranked in descending order of degrees of matching between a corresponding AI model and the photographing background of the first image. N is greater than 1, and N is an integer.

The degree of matching between the corresponding AI model and the photographing background of the first image may be a rate of successful matching between a corresponding feature of the corresponding AI model and a photographing background feature of the first image. Alternatively, the N photographing background categories may be ranked based on another factor, and a specific ranking rule, method, and the like are not limited in this embodiment of this application.

S402: The mobile phone recognizes brightness information and makeup information that are of a face corresponding to a face image in the first image.

The brightness information of the face corresponding to the face image includes brightness distribution information of the face corresponding to the face image, that is, brightness of each pixel in a face area corresponding to the face image.

For example, as shown in FIG. 1(a), because background light is excessively strong and the face area is not exposed enough, all skin color in the face area is relatively dark. For another example, as shown in FIG. 1(b), because the background light is relatively yellow, all skin color in the face area is relatively yellow due to impact of the background light in the face area. For still another example, as shown in FIG. 1(c), due to shielding by the hair and the hat and so on, brightness in the face area is not uniform, and skin color is relatively dark in a partial area due to shielding.

The makeup information of the face corresponding to the face image may include but is not limited to at least one of the following information: natural look/-light makeup/heavy makeup, foundation makeup information, an eyebrow shape, eyebrow color, eye makeup information, lipstick color information, eye line color, and an eye line shape. If the makeup information indicates that the face corresponding to the face image is not natural look, the makeup information may further include a makeup style. The makeup style may include makeup for working, makeup for dinner, cute makeup, makeup for playing out, and the like.

In a possible implementation, the mobile phone may recognize, by using a face attribute recognition algorithm, the brightness information and the makeup information that are of the face corresponding to the face image in the first image. In some embodiments, that the mobile phone recognizes, by using the face attribute recognition algorithm, the brightness information of the face corresponding to the face image in the first image may include the following step 1 to step 3.

Step 1: Recognize a face area in the first image.

The face area may be an area in a recognized rectangular box that surrounds the face. A specific method and process in which the mobile phone recognizes the face area in the first image are described below in detail.

Step 2: Collect statistics about pixel values of all pixels in the face area.

In a possible implementation, the statistics about the pixel values of all the pixels in the face area may be collected by traversing all the pixels in the face area.

Step 3: Determine brightness information of each pixel in the face area based on the pixel value of the pixel in the face area.

In some embodiments, that the mobile phone recognizes, by using the face attribute recognition algorithm, the makeup information of the face corresponding to the face image in the first image may include: classifying, by using a classification network such as a visual geometry group (Visual Geometry Group, VGG), a residual network (Residual Network, Resnet), or a lightweight neural network (such as SqueezeNet, MobileNet, or ShuffleNet), makeup in the face area corresponding to the face image in the first image, and outputting each makeup label (such as "natural look", "light makeup", or "heavy makeup") and a probability corresponding to each makeup label. For example, an output result includes the following: A probability that the makeup information of the face corresponding to the face image in the first image is "natural look" is 90%, a probability that the makeup information is "light makeup" is 9%, and a probability that the makeup information is "heavy makeup" is 1%. In this case, the mobile phone may predict, based on the result, that the makeup information of the face corresponding to the face image in the first image is "natural look".

The classification network such as VGG, Resnet, SqueezeNet, MobileNet, or ShuffleNet may perform deep learning and training on a large quantity of pictures including the face image, to obtain a makeup information classification model. For example, the large quantity of pictures including the face image may be pictures that include the face image and that are labelled by a user (for example, a label such as "natural look", "light makeup", or "heavy makeup"). The classification network may obtain the makeup information classification model by learning and training these pictures. Alternatively, the large quantity of pictures including the face image may be from another source. This is not limited in this embodiment of this application.

In addition, for a specific working principle of the classification network such as VGG, Resnet, SqueezeNet, MobileNet, or ShuffleNet, refer to descriptions in a conventional technology. Details are not described in this embodiment of this application.

It should be noted that an execution sequence of S402 and S401 is not limited in this embodiment of this application. The mobile phone may alternatively perform S402 before performing S401.

S403: The mobile phone performs, based on the photographing background information of the first image and the brightness information and the makeup information that are of the face corresponding to the face image in the first image, skin beautification processing on the face corresponding to the face image. If the first image is a photographed picture (as described in Example 2 and Example 3 in the foregoing), in a possible implementation, S403 may be completed by using the following step (1) and step (2).

Step (1): The mobile phone determines a skin beautification parameter based on the photographing background information of the first image and the brightness information and the makeup information that are of the face corresponding to the face image in the first image.

The skin beautification parameter may include but is not limited to a brightness parameter and a makeup parameter that are of each pixel. The makeup parameter may include but is not limited to a foundation makeup color parameter, a whitening parameter, a skin smoothing parameter, an eye makeup color parameter, and an eye line parameter.

In a possible implementation, the mobile phone may determine the brightness parameter of each pixel based on the brightness information of the face by using the following step (a1) and step (b).

Step (a1): Calculate average brightness in the face area.

In a possible implementation, the mobile phone may first count a quantity of pixels that are at each gray level in the pixels in the face area, to obtain a gray histogram of the face area; and then calculate the average brightness in the face area based on the gray histogram of the face area.

Step (b1): Determine the brightness parameter of each pixel based on the average brightness in the face area. Brightness of a pixel whose brightness is lower than the average brightness in the face area is properly enhanced, and brightness of a pixel whose brightness is higher than the average brightness in the face area is properly weakened.

In another possible implementation, the mobile phone may determine the brightness parameter of each pixel based on the brightness information of the face by using the following step (a2) and step (b2).

Step (a2): Obtain normal brightness in a face area of a user.

In a possible implementation, the mobile phone may determine, based on an image that includes the face area of the user and that is stored in a gallery, the normal brightness in the face area under normal lighting (for example, uniform lighting).

Step (b2): Determine the brightness parameter of each pixel based on the normal brightness in the face area. Brightness of a pixel whose brightness is lower than the normal brightness in the face area is properly enhanced, and brightness of a pixel whose brightness is higher than the normal brightness in the face area is properly weakened.

Step (2): The mobile phone performs, based on the determined skin beautification parameter, skin beautification processing on the face corresponding to the face image in the first image.

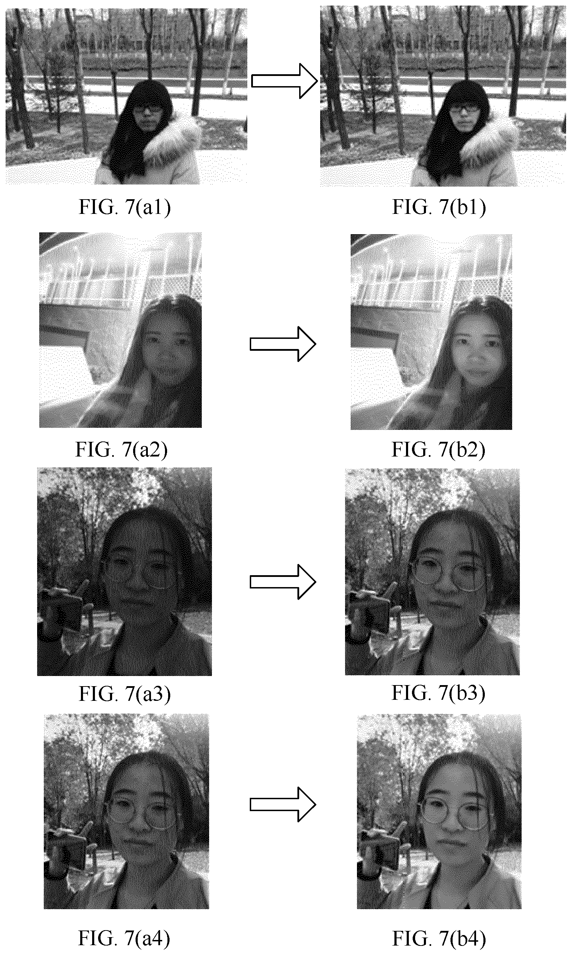

For example, the mobile phone recognizes that a photographing background of a picture shown in FIG. 7(a1) is "a snowy day", a face area in the picture is relatively black, and a face is natural look. The mobile phone learns, through analysis, that there are two reasons for the relatively black face area: The face is not exposed enough due to the natural look and strong background light, and insufficient exposure of the face is a main reason. In this case, the mobile phone may improve brightness and whiteness in the face area, so that as shown in FIG. 7(b1), the face matches the photographing background, and a photographing effect is better.

For another example, the mobile phone recognizes that a photographing background of a picture shown in FIG. 7(a2) is "a neon lamp at night", and a face area in the picture is relatively yellow. The mobile phone learns, through analysis, that the relatively yellow face area is not caused by objective skin color of a person, but caused by the neon light. In this case, the mobile phone may adjust skin color in the face area, so that as shown in FIG. 7(b2), the face area is less affected by the background neon light, and a photographing effect is better.

For another example, the mobile phone recognizes that luminance is not uniform in a face area in a picture shown in FIG. 7(a3). The mobile phone learns, through analysis, that the luminance is not uniform in the face area due to shielding by hair and a face angle (as shown in FIG. 7(a3), a face of a person is back to light). In this case, the mobile phone may adjust brightness in a shielded area of the face and/or a backlight area of the face caused by a deflection angle, so that as shown in FIG. 7(b3), brightness in the face area is more balanced and more natural, and a photographing effect is better.

For still another example, the mobile phone recognizes that a face area in a picture shown in FIG. 7(a4) is relatively dark, and a face is natural look. In this case, the mobile phone may improve brightness, whiteness, and skin smoothness in the face area, so that as shown in FIG. 7(b4), the face presents a better status, and a photographing effect is better.

In a possible implementation, step (2) may be completed by using the following process: First, the mobile phone constructs a face profile corresponding to the face image in the first image. Then, the mobile phone performs skin beautification processing on the constructed face profile.

In some embodiments, the mobile phone may construct, by using the following step (A) to step (C), the face profile corresponding to the face image in the first image.

Step (A): The mobile phone recognizes the face area in the first image and a main face feature (such as an eye, a lip, and a nose) in the face area.

For a method and process in which the mobile phone recognizes the face area in the first image and the main face feature in the face area, refer to a specific method and process in which the mobile phone recognizes the face area in the first image in the following description.

Step (B): The mobile phone recognizes attributes such as a gender, a race, an age, and an expression of the face image in the first image.

A specific method and process in which the mobile phone recognizes the attributes such as the gender, the race, the age, and the expression of the face image in the first image are specifically described below.

Step (C): The mobile phone constructs, based on results of recognition in step (A) and step (B), the face profile corresponding to the face image in the first image.

After constructing the face profile corresponding to the face image in the first image, the mobile phone may perform skin beautification processing on a face area in the face profile based on the determined skin beautification parameter, including performing, to different degrees, purposeful skin beautification processing such as skin smoothing, face slimming, and whitening on each face area that is in the face profile and that corresponds to the face image.

If the first image is a preview image in a camera of the mobile phone (as described in Example 1 in the foregoing), in a possible implementation, S403 may be completed by using the following three steps.

Step (a): The mobile phone determines a photographing parameter based on photographing background information of the preview image in the camera and brightness information and makeup information that are of a face corresponding to a face image in the preview image.

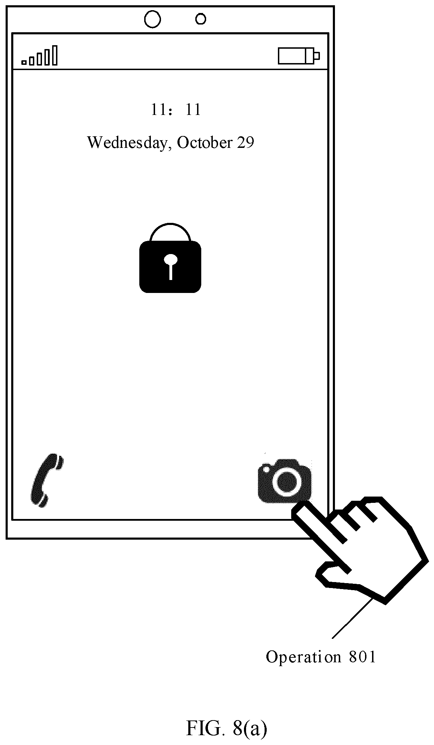

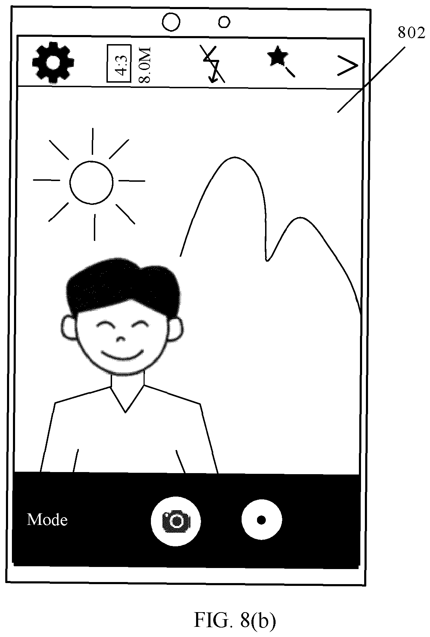

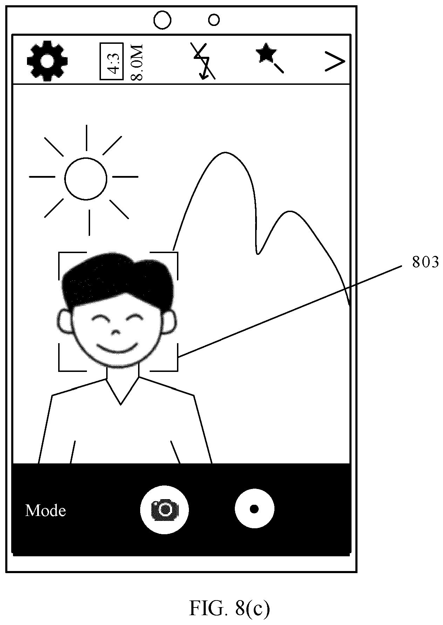

For example, the mobile phone starts the camera in response to an operation (as shown by an operation 801 in FIG. 8(a)) of tapping, on a lock screen of the mobile phone, an icon of the "camera" application installed in the mobile phone. After the camera is started, the mobile phone displays, on a display screen, a preview interface (as shown by an interface 802 shown in FIG. 8(b)) of self-photographing of a user. After obtaining the preview image, the mobile phone may recognize a photographing background of the preview image and a face (as shown by a face recognition block 803 shown in FIG. 8(c)) in the preview image. After recognizing the face, the mobile phone may further analyze brightness distribution information and makeup information of the face image.

The photographing parameter includes but is not limited to an exposure, a film speed, an aperture, white balance, a focal length, a metering manner, a flash, and the like. After recognizing the photographing background of the preview image in the camera, the brightness distribution information of the face image in the preview image in the camera, and the makeup information of the face image, the mobile phone may automatically adjust the photographing parameter comprehensively based on the foregoing information without manual adjustment, to purposefully beautify the preview image, thereby improving efficiency of adjusting the photographing parameter. In addition, a photographing parameter that is automatically adjusted by the mobile phone is usually a better photographing parameter than a photographing parameter that is manually adjusted by a user who is not very professional, is more suitable for a current preview image, and can be used to photograph a photo or a video with higher quality.

Step (b): The mobile phone receives a first operation.

The first operation is used to indicate to perform photographing. For example, the first operation is tapping a photographing icon on a touchscreen. Alternatively, the first operation is another preset action of a hand, for example, pressing a volume key, where the preset action indicates to "photograph a photo" or "photograph a video".

Step (c): In response to the first operation, the mobile phone photographs, based on the determined photographing parameter, a picture corresponding to the preview image in the camera.

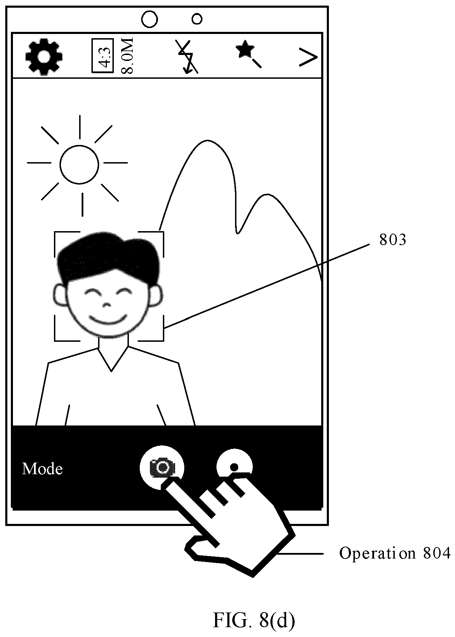

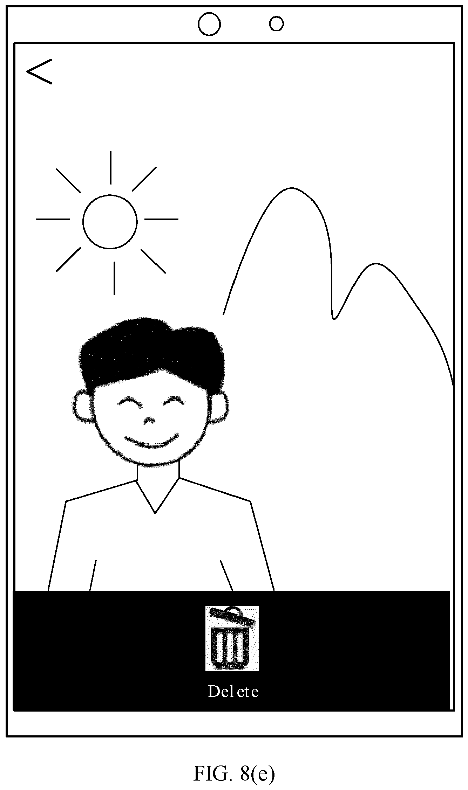

For example, in response to receiving the operation of tapping the photographing button, as shown by an operation 804 in FIG. 8(d), the mobile phone photographs, based on the determined photographing parameter, the picture corresponding to the preview image in the camera to obtain a selfie of the user, as shown in FIG. 8(e).

In some embodiments, after the mobile phone obtains the photographing background information of the first image, the mobile phone may display a photographing background label of the first image in a preview interface, or the mobile phone may display the photographing background label of the first image on a photographed photo.

The photographing background label is used to recognize a photographing background of the first image. The photographing background includes but is not limited to one or more of the following: scene information corresponding to the first image, weather information corresponding to the first image, and light information corresponding to the first image.

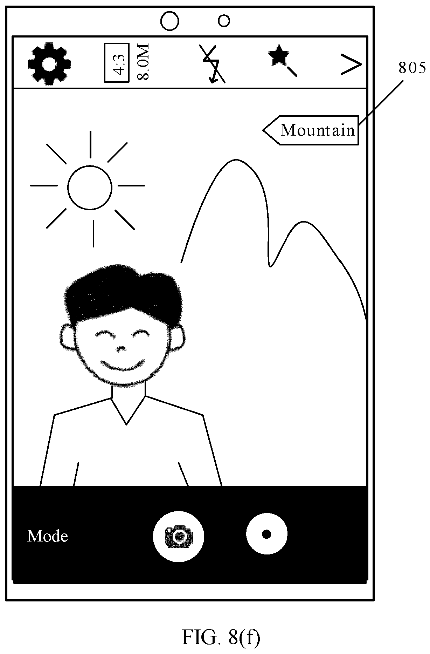

For example, as shown in FIG. 8(f), the mobile phone displays, at a corresponding location (as shown by 805 in FIG. 8(f)) in the preview interface, a photographing background "mountain" that is of a selfie of the user and that is recognized by the mobile phone.

In some embodiments, when the mobile phone recognizes the brightness information and the makeup information (that is, S402) that are of the face corresponding to the face image in the first image, the mobile phone may further recognize other attribute information corresponding to the face image in the first image, for example, a gender, a race, an age, and an expression.

For example, the mobile phone may recognize, by using an eigenface-based gender recognition algorithm, a gender attribute corresponding to the face image. Specifically, principal component analysis (principal component analysis, PCA) may be used to eliminate correlation between data, to reduce a high-dimensional image to low-dimensional space, and map a sample in a training set to a point in the low-dimensional space. When the first image is analyzed, the first image is first mapped to the low-dimensional space, then a sample point closest to the first image is determined, and a gender of the closest sample point is assigned to the first image.

Alternatively, the mobile phone may recognize, by using a Fisher criterion-based gender recognition method, a gender attribute corresponding to the face image. Specifically, a concept of linear projection analysis (Linear projection analysis, LPA) may be used to project a face sample in the first image onto a straight line that passes an origin, and it is ensured that projection of the sample on the line has a minimum intra-class distance and a maximum inter-class distance, thereby separating a boundary for recognizing male and female.

Alternatively, the mobile phone may recognize, by using an Adaboost+SVM-based face gender classification algorithm, a gender attribute corresponding to the face image. Specifically, preprocessing may be first performed on the first image to extract a Gabor wavelet feature of the image, then feature dimension reduction is performed by using an Adaboost classifier, and finally recognition is performed by using a trained support vector machine (Support Vector Machine, SVM) classifier to output a recognition result.

In a possible implementation, the mobile phone may recognize, by using a face race recognition algorithm that is based on Adaboost and SVM, a race attribute corresponding to the face image. Specifically, skin color information and a Gabor feature may be extracted from the face area, feature learning is performed by using an Adaboost cascade classifier, and finally feature classification is performed based on an SVM classifier to determine the race attribute of the face.

In a possible implementation, the mobile phone may recognize, based on a face age estimation algorithm that merges a local binary pattern (LBP) and a histogram of gradient (HOG), an age attribute corresponding to the face image. Specifically, local statistical features (that is, an LBP feature and a HOG feature) in the face area that have a close relationship with an age change may be first extracted, then the LBP feature and the HOG feature are merged by using a canonical correlation analysis (canonical correlation analysis, CA) method, and finally a face image library is trained and tested by using a support vector regression (SVR) method, to output the age attribute of the face.

In a possible implementation, the mobile phone may recognize, based on a face expression recognition algorithm that merges a local binary pattern (LBP) and local sparse representation, an expression attribute corresponding to the face image. Specifically, feature partitioning may be first performed on a face image in a normalized training set, an LBP feature in each face area is calculated, and feature vectors in the area are integrated by using a histogram statistical method, to form a local feature library that is of the training set and that includes a local feature of a specific face. Then, operations of normalization, face partitioning, local LBP feature calculation, and local histogram statistics collection are performed on the face in the first image. Finally, local sparse reconstruction representation is performed on local histogram statistics of the first image by using the local feature library of the training set, and final face expression classification and recognition are performed by using a local sparse reconstruction residual weighting method.

When the mobile phone recognizes, while recognizing the brightness information and the makeup information that are of the face corresponding to the face image in the first image, other attribute information such as a gender, a race, an age, and an expression that correspond to the face image, S403 may be as follows.

The mobile phone performs, based on the brightness information of the face corresponding to the face image in the first image, the makeup information corresponding to the face image, and the other attribute information such as the gender, the race, the age, and the expression that correspond to the face image, skin beautification processing on the face corresponding to the face image.

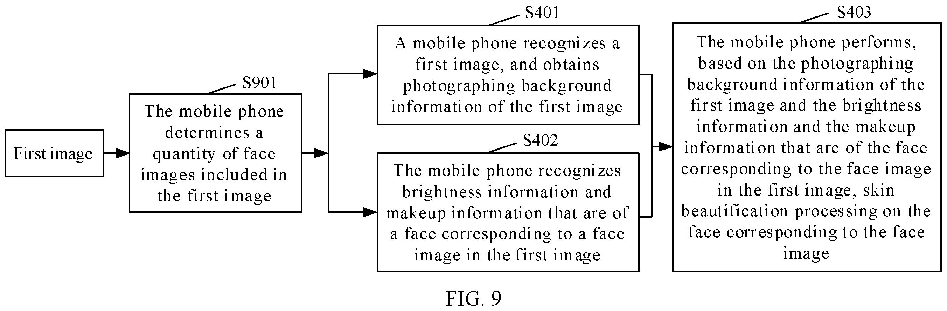

In some embodiments, as shown in FIG. 9, the image processing method in embodiments of this application may further include the following steps.

S901: The mobile phone determines a quantity of face images included in the first image.

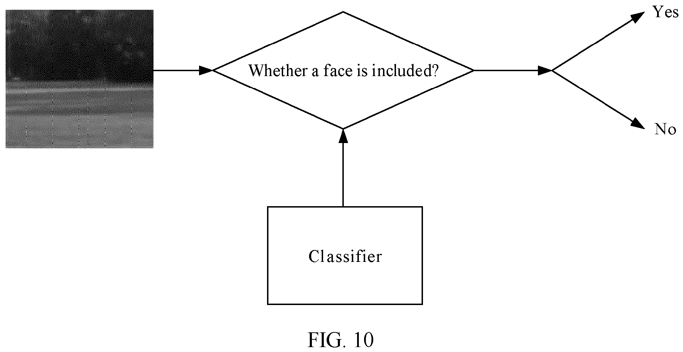

For example, the neural network in the mobile phone may perform training by using a large quantity of face sample images and non-face sample images, to obtain a classifier that solves a 2-class classification problem, where the classifier is also referred to as a face classifier model. The classifier may accept an input picture of a fixed size, and determine whether the input picture is a face. The mobile phone may analyze, by using the neural network, whether the first image includes a feature that matches a face sample in the classifier at a high degree, to determine whether the first image includes a face, as shown in FIG. 10. Each time the neural network recognizes a face, the classifier can output a result "yes", and a quantity of faces included in the first image can be determined by using the classifier.

Because a face may appear at any location in the first image, the classifier may use a sliding window (sliding window) technology when determining whether the first image includes a face. Specifically, the first image may be scanned from top to bottom and from left to right by using a window of a fixed size, to determine whether a sub-image in the window is a face.

For another example, the mobile phone may calculate a degree of matching between a feature sampled in the first image and a feature in a pre-designed face template to determine whether the first image includes a face, so as to determine a quantity of faces included in the first image.

For example, the mobile phone may perform feature matching between a face template image and each location in the first image to determine whether the first image has a face. For another example, the mobile phone estimates a face angle when performing feature matching between the face template image and each location in the first image by using the sliding window technology, rotates a detection window based on the angle, and then determines, based on a rotated detection window, whether a face is included, so as to determine a quantity of faces included in the first image.

Alternatively, because a face has a specific structure distribution feature, the mobile phone may determine, by analyzing a structure distribution feature extracted from the first image, whether the extracted structure distribution feature meets the structure distribution feature of the face, to determine whether the first image includes a face, so as to determine a quantity of faces included in the first image.

Alternatively, because a face has a specific gray distribution feature, the mobile phone may determine, by analyzing a gray distribution rule of the first image, whether the first image includes a face, so as to determine a quantity of faces included in the first image.

Alternatively, the mobile phone may determine, by using another method, that the first image includes a face, and determine a quantity of faces included in the first image. The foregoing examples are merely used as reference for several possible implementations, and a specific method for determining that the first image includes a face is not limited in this embodiment of this application.

It should be noted that S901 may be performed before S401 and S402, or may be performed simultaneously with S401 and S402. This is not limited in this application. As shown in FIG. 9, if S901 is performed before S401 and S402, S402 analyzing brightness information and makeup information of a face corresponding to each face image detected by the mobile phone.

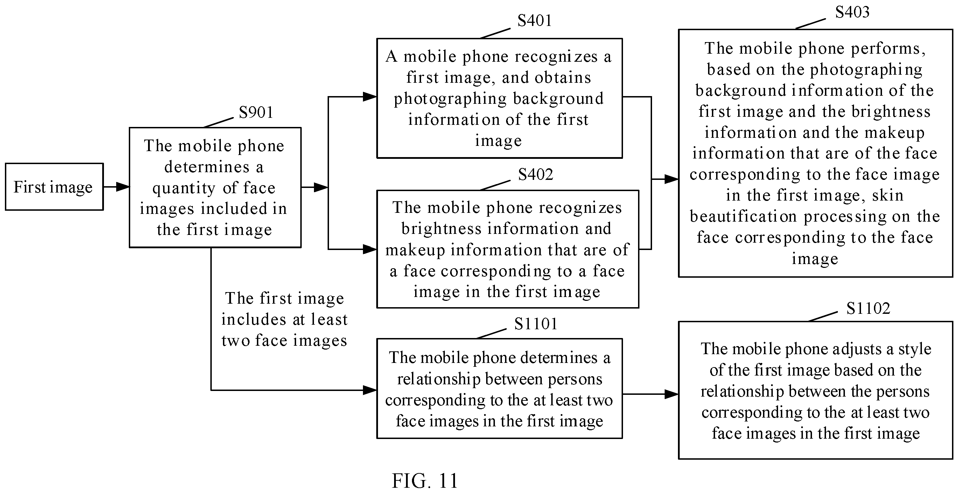

In some embodiments, if the mobile phone determines that the first image includes at least two faces, as shown in FIG. 11, the image processing method in embodiments of this application may further include the following steps before S403.

S1101: The mobile phone determines a relationship between persons corresponding to at least two face images in the first image.

The relationship between the persons corresponding to the at least two face images in the first image may be that they are friends, colleagues, father and son, husband and wife, mother and son, or the like.

For example, the mobile phone may determine, in the following four manners, the relationship between the persons corresponding to the at least two face images in the first image.

Manner (1): The mobile phone may perform pixel segmentation, feature analysis, and specific point measurement value calculation on a face in a photo in a mobile phone gallery or in a photo shared by a user in a social APP (such as WeChat, QQ, or Weibo), to establish a face model training set.

In this way, when determining the relationship between the persons corresponding to the at least two face images in the first image, the mobile phone may first perform pixel segmentation and feature analysis on each face in the first image to find a face that matches a face feature in the face model training set at a highest degree. Then, the mobile phone determines, based on information that is in the training set and that corresponds to the face, the relationship between the persons corresponding to the at least two face images in the first image.

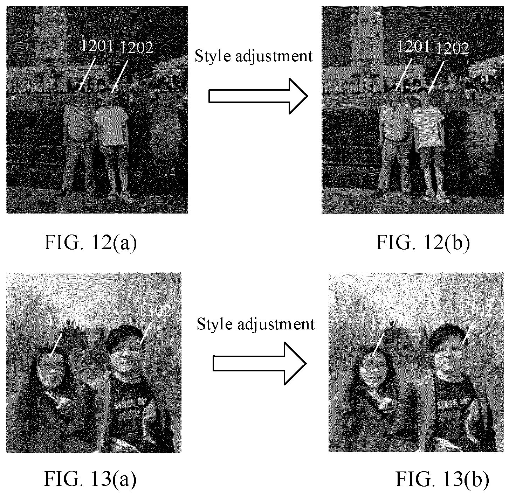

For example, the first image is shown as FIG. 12(a), and includes two face images: a face image 1201 and a face image 1202. The mobile phone analyzes the first image by using the neural network, determines that the face image 1201 matches, at a highest degree, a face model whose person label is "father" in the training set, and determines that the face image 1202 matches, at a highest degree, a face model whose person label is "me" in the training set. The mobile phone can determine that a relationship between persons corresponding to the two face images in the first image is father-child.

For another example, the first image is shown as FIG. 13(a), and includes two face images: a face image 1301 and a face image 1302. The mobile phone analyzes the first image by using the neural network, determines that the face image 1301 matches a face image 1 in the training set at a highest degree, and determines that the face image 1202 matches a face image 2 in the training set at a highest degree. The face image 1 and the face image 2 are from a wedding photo shared by a user in a friend circle, or the face image 1 and the face image 2 are from an album named "wedding photo" in a mobile phone gallery. Therefore, the mobile phone can determine that a relationship between persons corresponding to the two face images in the first image is that they are a couple.

Manner (2): The mobile phone may determine, by using a label corresponding to each person image in the first image, the relationship between the persons corresponding to the at least two face images in the first image.

The label corresponding to each person image in the first image is used to indicate information such as an identity, a name, and a position of the corresponding person. The label may be added by a user. For example, after photographing a group photo, the user may manually enter a position (such as a manager or a group leader) of the person at a location corresponding to each face image in the group photo. The mobile phone may determine, based on the label, a relationship between persons corresponding to the face images in the first image.

Manner (3): The mobile phone may perform attribute recognition on the at least two face images in the first image to obtain information such as a race, a gender, and an age that correspond to each face image; and/or the mobile phone may analyze a relative location between the persons corresponding to the at least two face images in the first image. The mobile phone determines, based on the foregoing information, the relationship between the persons corresponding to the at least two face images in the first image.

Using FIG. 12(a) as an example, the mobile phone performs attribute recognition on the face image 1201 and the face image 1202 to determine the following information: Genders corresponding to the face image 1201 and the face image 1202 each are male, an age corresponding to the face image 1201 is about 60 years old, and an age corresponding to the face image 1202 is about 40 years old. The mobile phone can speculate that the relationship between the persons corresponding to the two face images in the first image is that they are father and son.

Using FIG. 13(a) as another example, the mobile phone performs attribute recognition on the face image 1301 and the face image 1302 to determine the following information: A gender corresponding to the face image 1301 is female, a gender corresponding to the face 1302 is male, and ages corresponding to the face image 1301 and the face image 1302 each are about 30 years old. Further, by analyzing locations of the person images (as shown in FIG. 13(a), the persons stand relatively close and hold hands), the mobile phone can speculate that the relationship between the persons corresponding to the two face images in the first image is that they are a couple.

Manner (4): The mobile phone may find, from a gallery or a social APP by using a clustering algorithm, a picture similar to the face image in the first image, and then determines, with reference to information (a label, a category, or the like, and text description in a friend circle of WeChat) about the picture and/or a face attribute recognition result, a relationship between persons corresponding to two face images in the first image.

It should be noted that in this embodiment of this application, only the foregoing several possible methods for determining the relationship between the persons corresponding to the two face images in the first image are enumerated. Actually, the relationship between the persons corresponding to the two face images in the first image may also be determined by using another method. A specific implementation method is not limited in this embodiment of this application.

S1102: The mobile phone adjusts a style of the first image based on the relationship between the persons corresponding to the at least two face images in the first image.

The style adjustment may include but is not limited to adjustment of background color (for example, a warm color system, a cold color system, and a pink system) and/or adjustment of a background style (for example, a cool style, a warm style, and a sweet style).

For example, for the first image shown in FIG. 12(a), the mobile phone learns, through analysis, that the relationship between the persons corresponding to the two face images in the first image is that they are father and son. In this case, the mobile phone may adjust a background style of the first image to a warm style, and adjust background color to a warm color system, as shown in FIG. 12(b), so that the first image looks warmer as a whole.

For another example, for the first image shown in FIG. 13(a), the mobile phone learns, through analysis, that the relationship between the persons corresponding to the two face images in the first image is that they are a couple. In this case, the mobile phone may adjust a background style of the first image to a sweet style, and adjust background color to a pink system, as shown in FIG. 13(b), so that the first image looks sweeter as a whole.

S1102 may be performed before S403, may be performed after S403, or may be performed simultaneously with the S403. A specific execution sequence of S1102 and S403 is not limited in this application.

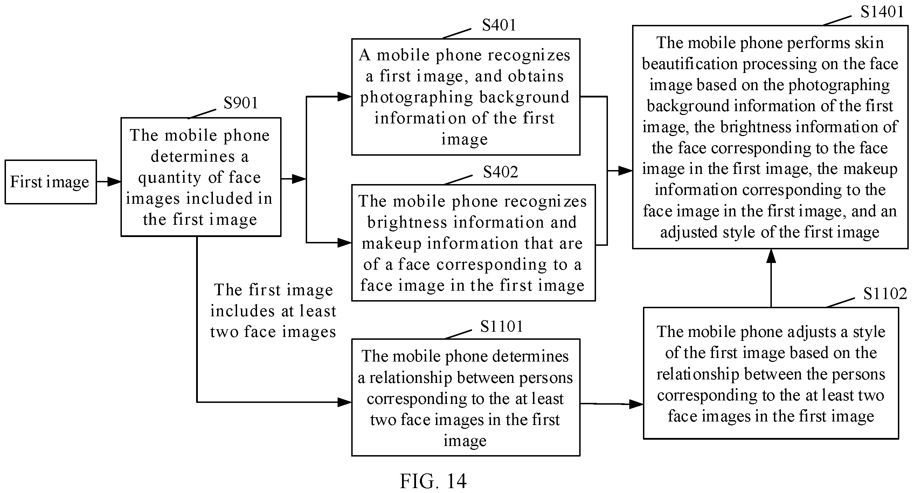

If S1102 is performed before S403, in some embodiments, as shown in FIG. 14, S403 may be replaced with the following step.

S1401: The mobile phone performs skin beautification processing on the face image based on the photographing background information of the first image, the brightness information of the face corresponding to the face image in the first image, the makeup information corresponding to the face image in the first image, and an adjusted style of the first image.

When performing skin beautification processing on the face image, the mobile phone may perform skin beautification based on a style of the first image. For example, if the style of the first image is a warm style in a warm color system, the mobile phone may adjust a color system of the face image to a warm color system, so that the face image is more harmonious with the background style, and an effect is better.

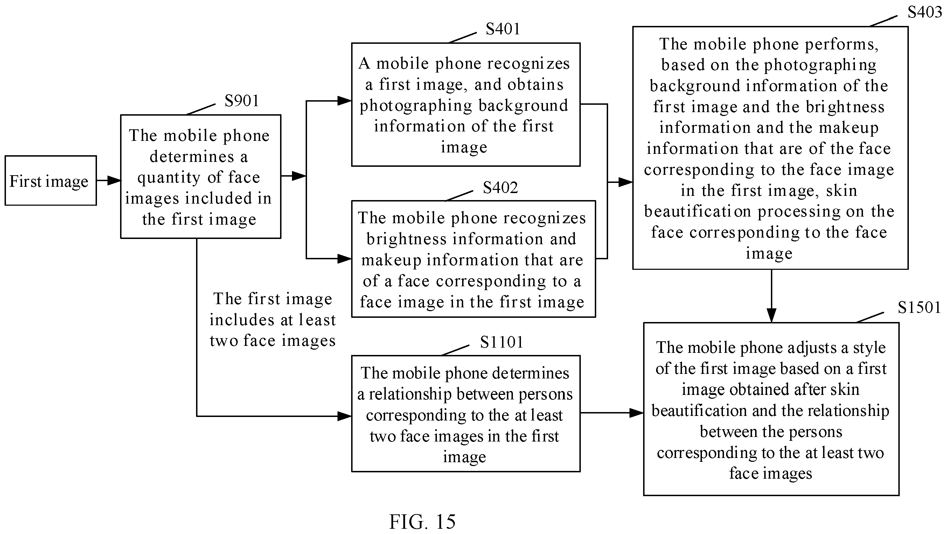

If S1102 is performed after S403, in some embodiments, as shown in FIG. 15, S1102 may be replaced with the following step.

S1501: The mobile phone adjusts a style of the first image based on a first image obtained after skin beautification and the relationship between the persons corresponding to the at least two face images.

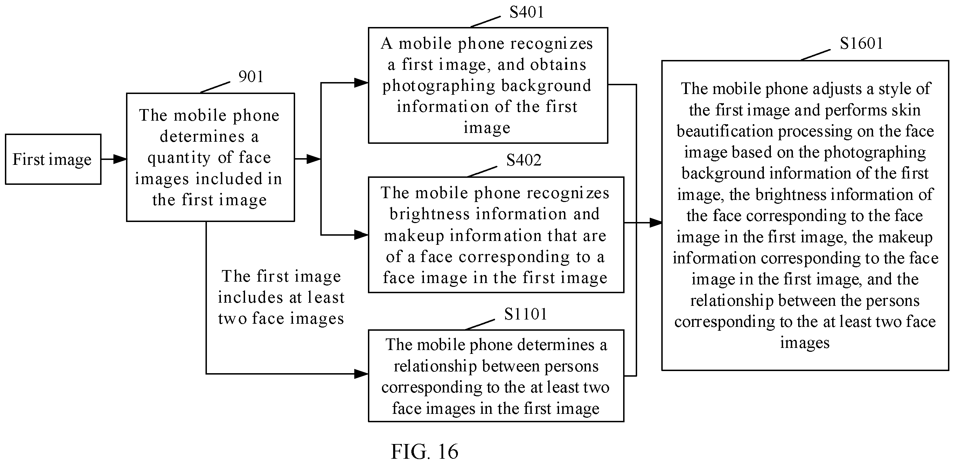

In some embodiments, as shown in FIG. 16, after S401, S402, and S1101, S403 and S406 (or S1401 and S1102, or S403 and S1102) may be replaced with the following step.

S1601: The mobile phone adjusts a style of the first image and performs skin beautification processing on the face image based on the photographing background information of the first image, the brightness information of the face corresponding to the face image in the first image, the makeup information corresponding to the face image in the first image, and the relationship between the persons corresponding to the at least two face images.

In other words, the mobile phone may comprehensively consider the photographing background information of the first image, the brightness information of the face corresponding to the face image in the first image, the makeup information corresponding to the face image in the first image, and the relationship between the persons, to adjust background color and a background style of the first image and a style of the face image, and complete skin beautification processing on the face image.

It can be understood that to implement the function of any one of the foregoing embodiments, the electronic device includes a corresponding hardware structure and/or software module that performs each function. A person skilled in the art should be readily ware that, units and algorithm steps in each example described with reference to embodiments disclosed in this specification may be implemented in this application in a form of hardware or a combination of hardware and computer software. Whether a function is performed by hardware or by computer software driving hardware depends on a specific application and design constraint condition of the technical solution. A person skilled in the art may use different methods for specific applications to implement the described functions, but this implementation should not be considered to be beyond the scope of this application.

In embodiments of this application, the electronic device may be divided into functional modules. For example, each functional module corresponding to each function may be obtained through division, or two or more functions may be integrated into one processing module. The integrated module may be implemented in a form of hardware, or may be implemented in a form of a software functional module. It should be noted that module division in embodiments of this application is an example, and is merely logical function division. In actual implementation, there may be another division manner.

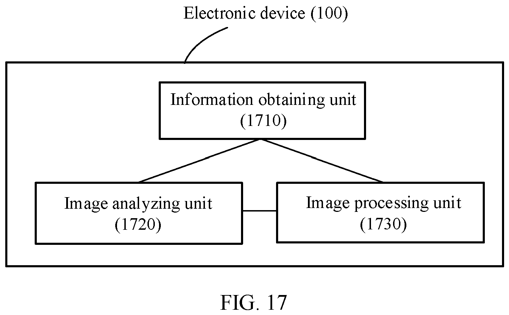

For example, when each functional module is obtained through division in an integrated manner, FIG. 17 is a schematic diagram of a structure of an electronic device according to an embodiment of this application. The electronic device 100 may include an information obtaining unit 1710, an image analyzing unit 1720, and an image processing unit 1730.

The information obtaining unit 1710 is configured to support the electronic device 100 in obtaining a first image, including but not limited to obtaining a preview image in a camera or receiving a picture from a third party, and/or is configured to perform another process of the technology described in this specification. The image analyzing unit 1720 is configured to support the electronic device 100 in performing the steps S401, S402, S901, and S1101, and/or is configured to perform another process of the technology described in this specification. The image processing unit 1730 is configured to support the electronic device 100 in performing the steps S403, S1102, S1401, S1501, and S1601, and/or is configured to perform another process of the technology described in this specification.

It should be noted that for all related content of the steps in the foregoing method embodiment, refer to function descriptions of corresponding functional modules. Details are not described herein again.

It should be noted that the information obtaining unit 1710 may include a radio frequency circuit. Specifically, the electronic device 100 may receive and send a wireless signal by using the radio frequency circuit. Generally, the radio frequency unit includes but is not limited to an antenna, at least one amplifier, a transceiver, a coupler, a low noise amplifier, a duplexer, and the like. In addition, the radio frequency circuit may further communicate with another device through wireless communication. The wireless communication may use any communications standard or protocol, including but not limited to a global system for mobile communications, a general packet radio service, code division multiple access, wideband code division multiple access, Long Term Evolution, an email, a short message service, and the like. Specifically, in this embodiment of this application, the electronic device 100 may receive the first image from a third party by using the radio frequency circuit in the information obtaining unit 1710.

It should be noted that the image processing method provided in embodiments of this application may be performed by an image processing apparatus. The image processing apparatus may be a controller or a processor that is in an electronic device and that is configured to perform the image processing method. The image processing apparatus may be a chip in the electronic device, or the image processing apparatus may be an independent device or the like and is configured to perform the image processing method provided in embodiments of this application.

The image processing apparatus may have the structure shown in FIG. 17, that is, the image processing apparatus may include an information obtaining unit, an image analyzing unit, and an image processing unit.

In an optional manner, when data transmission is implemented by using software, the data transmission may be completely or partially implemented in a form of a computer program product. The computer program product includes one or more computer instructions. When the computer program instruction is loaded and executed on a computer, all or some of the procedures or functions described in embodiments of this application are implemented. The computer may be a general-purpose computer, a dedicated computer, a computer network, or another programmable apparatus. The computer instruction may be stored in a computer-readable storage medium, or transmitted from one computer-readable storage medium to another computer-readable storage medium. For example, the computer instruction may be transmitted from one website, computer, server, or data center to another website site, computer, server, or data center in a wired manner (for example, a coaxial cable, an optical fiber, a digital subscriber line (DSL)) or wireless manner (for example, infrared, wireless, microwave). The computer-readable storage medium may be any available medium that can be accessed by a computer, or a data storage device such as a server or a data center that includes one or more available media. The available medium may be a magnetic medium (for example, a floppy disk, a hard disk, or a magnetic tape), an optical medium (for example, a DVD), or a semiconductor medium (for example, a solid state disk (Solid State Disk, SSD)).

The methods or algorithm steps described with reference to embodiments of this application may be implemented in a hardware manner, or may be implemented in a manner in which a processor executes software instructions. The software instruction may include a corresponding software module, and the software module may be stored in a RAM memory, a flash memory, a ROM memory, an EPROM memory, an EEPROM memory, a register, a hard disk, a removable hard disk, a CD-ROM, or any other form of storage medium familiar in the art. An example storage medium is coupled to the processor, so that the processor can read information from the storage medium and can write information into the storage medium. Certainly, the storage medium may be a component of the processor. The processor and the storage medium may be located in an ASIC. In addition, the ASIC may be located in a detection apparatus. Certainly, the processor and the storage medium may also exist in the detection apparatus as discrete components.

According to the descriptions of the foregoing implementations, a person skilled in the art can clearly understand that for convenience and brevity of the description, only division of the foregoing functional modules is used as an example for description. In actual application, the foregoing functions may be allocated to different functional modules based on a requirement and be completed, to be specific, an internal structure of the apparatus is divided into different functional modules, to complete all or some of the functions described in the foregoing.

In the several embodiments provided in this application, it should be understood that the disclosed user equipment and method can be implemented in other manners. For example, the described apparatus embodiment is merely an example. For example, module or unit division is merely logical function division. In actual implementation, there may be another division manner. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one physical unit or a plurality of physical units, that is, may be located in one place, or may be distributed in a plurality of different places. Some or all of the units may be selected based on an actual requirement to implement the objectives of the solutions in embodiments.

In addition, the functional units in embodiments of this application may be integrated into one processing unit, or each of the units may exist physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. However, the storage medium includes any medium that can store program code, such as a USB flash drive, a read-only memory (Read-Only Memory, ROM), a random access memory (Random Access Memory, RAM), a magnetic disk, or an optical disc.

## Claims

1. An image processing method, wherein the method comprises:

   obtaining (401), by an electronic device, photographing background information of a first image, wherein the first image comprises a face image;
   recognizing (402), by the electronic device, brightness information and makeup information that are of a face corresponding to the face image in the first image; and
   performing (403), by the electronic device based on the photographing background information of the first image and the brightness information and the makeup information that are of the face corresponding to the face image in the first image, skin beautification processing on the face corresponding to the face image,
   wherein the recognizing, by the electronic device, makeup information of a face corresponding to the face image in the first image comprises:

      classifying, by the electronic device, makeup in the face area by using a classification network, and outputting each makeup label and a probability corresponding to each makeup label, wherein
      a probability corresponding to each type of makeup is used to represent the makeup information of the face corresponding to the face image and the probability of each makeup label,

wherein the first image is a picture stored in the electronic device, or the first image is a picture obtained by the electronic device from another device,

wherein the performing, by the electronic device based on the photographing background information of the first image and the brightness information and the makeup information that are of the face corresponding to the face image in the first image, skin beautification processing on the face corresponding to the face image comprises:

> determining, by the electronic device, a skin beautification parameter based on the photographing background information of the first image and the brightness information and the makeup information that are of the face corresponding to the face image in the first image; and
> performing, by the electronic device based on the skin beautification parameter, skin beautification processing on the face corresponding to the face image in the first image.

2. The method according to claim 1, wherein the recognizing, by the electronic device, brightness information of a face corresponding to the face image in the first image comprises:

> recognizing, by the electronic device, a face area in the first image; and
> determining, by the electronic device, brightness information of each pixel in the face area based on a pixel value of the pixel in the face area.

3. The method according to claim 1 or 2, wherein the classification network is at least any one of a visual geometry group, VGG, a residual network, Resnet, or a lightweight neural network.

4. The method according to any one of claims 1 to 3, wherein the skin beautification parameter comprises a brightness parameter and a makeup parameter that are of each pixel in the face area.

5. The method according to any one of claims 1 to 4, wherein the method further comprises:

> determining, by the electronic device, that the first image comprises at least two face images;
> determining, by the electronic device, a relationship between persons corresponding to the at least two face images; and
> adjusting, by the electronic device, a style of the first image based on the relationship between the persons corresponding to the at least two face images, wherein
> the adjusting a style of the first image comprises adjusting background color of the first image and/or adjusting a background style of the first image.

6. The method according to any one of claims 1 to 5, wherein the method further comprises:
recognizing, by the electronic device, at least one of a gender attribute, a race attribute, an age attribute, and an expression attribute that correspond to the face image in the first image.

7. The method according to claim 6, wherein the performing, by the electronic device based on the photographing background information of the first image and the brightness information and the makeup information that are of the face corresponding to the face image in the first image, skin beautification processing on the face corresponding to the face image comprises:
performing, by the electronic device based on the photographing background information of the first image, the brightness information and the makeup information that are of the face corresponding to the face image in the first image, and at least one of the gender attribute, the race attribute, the age attribute, and the expression attribute that correspond to the face image in the first image, skin beautification processing on the face corresponding to the face image.

8. An electronic device (100), wherein the electronic device comprises:

> an information obtaining unit (1710), configured to obtain photographing background information of a first image, wherein the first image comprises a face image;
> an image analyzing unit (1720), configured to recognize brightness information and makeup information that are of a face corresponding to the face image in the first image; and
> an image processing unit (1730), configured to perform, based on the photographing background information of the first image and the brightness information and the makeup information that are of the face corresponding to the face image in the first image, skin beautification processing on the face corresponding to the face image,
> wherein the information obtaining unit (1710), the image analyzing unit (1720), and the image processing unit (1730) are further configured to perform the image processing method according to any one of claims 1 to 7.

9. A chip system, wherein the chip system comprises:

   a storage medium, configured to store instructions; and
   a processing circuit, configured to execute the instructions to implement the image processing method according to any one of claims 1 to 7.


**Patentansprüche**

1. Bildverarbeitungsverfahren, wobei das Verfahren Folgendes umfasst:

   Erlangen (401), durch eine elektronische Einrichtung, von Fotografiehintergrundinformationen eines ersten Bildes, wobei das erste Bild ein Gesichtsbild umfasst;
   Erkennen (402), durch die elektronische Einrichtung, von Helligkeitsinformationen und Make-up-Informationen, die von einem Gesicht stammen, das dem Gesichtsbild in dem ersten Bild entspricht; und
   Durchführen (403), durch die elektronische Einrichtung basierend auf den Fotografiehintergrundinformationen des ersten Bildes und den Helligkeitsinformationen und den Make-up-Informationen, die von dem Gesicht stammen, das dem Gesichtsbild in dem ersten Bild entspricht, von Hautverschönerungsverarbeitung an dem Gesicht, das dem Gesichtsbild entspricht,
   wobei das Erkennen, durch die elektronische Einrichtung, von Make-up-Informationen eines Gesichts, das dem Gesichtsbild in dem ersten Bild entspricht, Folgendes umfasst:

   Klassifizieren, durch die elektronische Einrichtung, von Make-up in dem Gesichtsbereich unter Verwendung eines Klassifizierungsnetzwerks und Ausgeben jedes Make-up-Labels und einer Wahrscheinlichkeit, die jedem Make-up-Label entspricht, wobei
   eine Wahrscheinlichkeit, die jeder Art von Make-up entspricht, verwendet wird, um die Make-up-Informationen des Gesichts, das dem Gesichtsbild entspricht, und die Wahrscheinlichkeit jedes Make-up-Labels darzustellen,
   wobei das erste Bild eine Aufnahme ist, die in der elektronischen Einrichtung gespeichert ist, oder das erste Bild eine Aufnahme ist, die durch die elektronische Einrichtung von einer anderen Einrichtung erlangt wird, wobei das Durchführen, durch die elektronische Einrichtung basierend auf den Fotografiehintergrundinformationen des ersten Bildes und den Helligkeitsinformationen und den Make-up-Informationen, die von dem Gesicht stammen, das dem Gesichtsbild in dem ersten Bild entspricht, von Hautverschönerungsverarbeitung an dem Gesicht, das dem Gesichtsbild entspricht, Folgendes umfasst:

   Bestimmen, durch die elektronische Einrichtung, eines Hautverschönerungsparameters basierend auf den Fotografiehintergrundinformationen des ersten Bildes und den Helligkeitsinformationen und den Make-up-Informationen, die von dem Gesicht stammen, das dem Gesichtsbild in dem ersten Bild entspricht; und
   Durchführen, durch die elektronische Einrichtung basierend auf dem Hautverschönerungsparameter, von Hautverschönerungsverarbeitung an dem Gesicht, das dem Gesichtsbild in dem ersten Bild entspricht.

2. Verfahren nach Anspruch 1, wobei das Erkennen, durch die elektronische Einrichtung, von Helligkeitsinformationen eines Gesichts, das dem Gesichtsbild in dem ersten Bild entspricht, Folgendes umfasst:

   Erkennen, durch die elektronische Einrichtung, eines Gesichtsbereichs in dem ersten Bild; und
   Bestimmen, durch die elektronische Einrichtung, von Helligkeitsinformationen jedes Pixels in dem Gesichtsbereich basierend auf einem Pixelwert des Pixels in dem Gesichtsbereich.

3. Verfahren nach Anspruch 1 oder 2, wobei das Klassifizierungsnetzwerk mindestens eines von einer visuellen Geometriegruppe, VGG, einem Restnetzwerk, Resnet, oder einem leichten neuronalen Netzwerk ist.

4. Verfahren nach einem der Ansprüche 1 bis 3, wobei der Hautverschönerungsparameter einen Helligkeitsparameter und einen Make-up-Parameter umfasst, die von jedem Pixel in dem Gesichtsbereich stammen.

5. Verfahren nach einem der Ansprüche 1 bis 4, wobei das Verfahren ferner Folgendes umfasst:

   Bestimmen, durch die elektronische Einrichtung, dass das erste Bild mindestens zwei Gesichtsbilder umfasst;
   Bestimmen, durch die elektronische Einrichtung, einer Beziehung zwischen Personen, die den mindestens zwei Gesichtsbildern entsprechen; und

Einstellen, durch die elektronische Einrichtung, eines Stils des ersten Bildes basierend auf der Beziehung zwischen den Personen, die den mindestens zwei Gesichtsbildern entsprechen, wobei

das Einstellen eines Stils des ersten Bildes Einstellen einer Hintergrundfarbe des ersten Bildes und/oder Einstellen eines Hintergrundstils des ersten Bildes umfasst.

6. Verfahren nach einem der Ansprüche 1 bis 5, wobei das Verfahren ferner Folgendes umfasst:
Erkennen, durch die elektronische Einrichtung, mindestens eines von einem Geschlechts-Attribut, einem Ethnien-Attribut, einem Alters-Attribut und einem Ausdrucks-Attribut, das dem Gesichtsbild in dem ersten Bild entspricht.

7. Verfahren nach Anspruch 6, wobei das Durchführen, durch die elektronische Einrichtung basierend auf den Fotografiehintergrundinformationen des ersten Bildes und den Helligkeitsinformationen und den Make-up-Informationen, die von dem Gesicht stammen, das dem Gesichtsbild in dem ersten Bild entspricht, von Hautverschönerungsverarbeitung an dem Gesicht, das dem Gesichtsbild entspricht, Folgendes umfasst:
Durchführen, durch die elektronische Einrichtung basierend auf den Fotografiehintergrundinformationen des ersten Bildes, den Helligkeitsinformationen und den Make-up-Informationen, die von dem Gesicht stammen, das dem Gesichtsbild in dem ersten Bild entspricht, und mindestens einem von dem Geschlechts-Attribut, dem Ethnien-Attribut, dem Alters-Attribut und dem Ausdrucks-Attribut, das dem Gesichtsbild in dem ersten Bild entspricht, von Hautverschönerungsverarbeitung an dem Gesicht, das dem Gesichtsbild entspricht.

8. Elektronische Einrichtung (100), wobei die elektronische Einrichtung Folgendes umfasst:

eine Informationserlangungseinheit (1710), die dazu konfiguriert ist, Fotografiehintergrundinformationen eines ersten Bildes zu erlangen, wobei das erste Bild ein Gesichtsbild umfasst;
eine Bildanalyseeinheit (1720), die dazu konfiguriert ist, Helligkeitsinformationen und Make-up-Informationen, die von einem Gesicht stammen, das dem Gesichtsbild in dem ersten Bild entspricht, zu erkennen; und
eine Bildverarbeitungseinheit, (1730), die dazu konfiguriert ist, basierend auf den Fotografiehintergrundinformationen des ersten Bildes und den Helligkeitsinformationen und den Make-up-Informationen, die von dem Gesicht stammen, das dem Gesichtsbild in dem ersten Bild entspricht, Hautverschönerungsverarbeitung an dem Gesicht, das dem Gesichtsbild entspricht, durchzuführen, wobei die Informationserlangungseinheit (1710), die Bildanalyseeinheit (1720) und die Bildverarbeitungseinheit (1730) ferner dazu konfiguriert sind, das Bildverarbeitungsverfahren nach einem der Ansprüche 1 bis 7 durchzuführen.

9. Chipsystem, wobei das Chipsystem Folgendes umfasst:

ein Speichermedium, das dazu konfiguriert ist, Anweisungen zu speichern; und
eine Verarbeitungsschaltung, die dazu konfiguriert ist, die Anweisungen auszuführen, um das Bildverarbeitungsverfahren nach einem der Ansprüche 1 bis 7 umzusetzen.

**Revendications**

1. Procédé de traitement d'image, dans lequel le procédé comprend :

l'obtention (401), par un dispositif électronique, d'informations de fond de photographie d'une première image, dans lequel la première image comprend une image de visage ;
la reconnaissance (402), par le dispositif électronique, d'informations de luminosité et d'informations de maquillage d'un visage correspondant à l'image de visage dans la première image ; et
la réalisation (403), par le dispositif électronique sur la base des informations de fond de photographie de la première image et des informations de luminosité et des informations de maquillage du visage correspondant à l'image de visage dans la première image, d'un traitement d'embellissement de la peau sur le visage correspondant à l'image de visage,
dans lequel la reconnaissance, par le dispositif électronique, d'informations de maquillage d'un visage correspondant à l'image de visage dans la première image comprend :

le classement, par le dispositif électronique, du maquillage dans la zone de visage en utilisant un réseau de classification, et le fait de délivrer en sortie chaque étiquette de maquillage et une probabilité correspondant à chaque étiquette de maquillage, dans lequel
une probabilité correspondant à chaque type de maquillage est utilisée pour représenter les informations de maquillage du visage correspondant à l'image de visage et la probabilité de chaque étiquette de maquillage,

dans lequel la première image est une image stockée dans le dispositif électronique, ou la première image est une image obtenue par le dispositif électronique à partir d'un autre dispositif,

dans lequel la réalisation, par le dispositif électronique sur la base des informations de fond de photographie de la première image et des informations de luminosité et des informations de maquillage du visage correspondant à l'image de visage dans la première image, d'un traitement d'embellissement de la peau sur le visage correspondant à l'image de visage comprend :

la détermination, par le dispositif électronique, d'un paramètre d'embellissement de la peau sur la base des informations de fond de photographie de la première image et des informations de luminosité et des informations de maquillage du visage correspondant à l'image de visage dans la première image ; et

la réalisation, par le dispositif électronique sur la base du paramètre d'embellissement de la peau, d'un traitement d'embellissement de la peau sur le visage correspondant à l'image de visage dans la première image.

2. Procédé selon la revendication 1, dans lequel la reconnaissance, par le dispositif électronique, d'informations de luminosité d'un visage correspondant à l'image de visage dans la première image comprend :

la reconnaissance, par le dispositif électronique, d'une zone de visage dans la première image ; et
la détermination, par le dispositif électronique, d'informations de luminosité de chaque pixel dans la zone de visage sur la base d'une valeur de pixel du pixel dans la zone de visage.

3. Procédé selon la revendication 1 ou 2, dans lequel le réseau de classification est au moins l'un quelconque d'un groupe de géométrie visuelle, VGG, d'un réseau résiduel, Resnet, ou d'un réseau de neurones légers.

4. Procédé selon l'une quelconque des revendications 1 à 3, dans lequel le paramètre d'embellissement de la peau comprend un paramètre de luminosité et un paramètre de maquillage de chaque pixel de la zone de visage.

5. Procédé selon l'une quelconque des revendications 1 à 4, dans lequel le procédé comprend également :

le fait de déterminer, par le dispositif électronique, que la première image comprend au moins deux images de visage ;
la détermination, par le dispositif électronique, d'une relation entre des personnes correspondant aux au moins deux images de visage ; et
le réglage, par le dispositif électronique, d'un style de la première image sur la base de la relation entre les personnes correspondant aux au moins deux images de visage, dans lequel
le réglage d'un style de la première image comprend le réglage de la couleur du fond de la première image et/ou le réglage d'un style du fond de la première image.

6. Procédé selon l'une quelconque des revendications 1 à 5, dans lequel le procédé comprend également :
la reconnaissance, par le dispositif électronique, d'au moins l'un d'un attribut de genre, d'un attribut de race, d'un attribut d'âge et d'un attribut d'expression qui correspondent à l'image de visage dans la première image.

7. Procédé selon la revendication 6, dans lequel la réalisation, par le dispositif électronique sur la base des informations de fond de photographie de la première image et des informations de luminosité et des informations de maquillage du visage correspondant à l'image de visage dans la première image, d'un traitement d'embellissement de la peau sur le visage correspondant à l'image de visage comprend :
la réalisation, par le dispositif électronique sur la base des informations de fond de photographie de la première image, des informations de luminosité et des informations de maquillage du visage correspondant à l'image de visage dans la première image, et au moins l'un de l'attribut de genre, de l'attribut de race, de l'attribut d'âge et de l'attribut d'expression qui correspondent à l'image de visage dans la première image, d'un traitement d'embellissement de la peau sur le visage correspondant à l'image de visage.

8. Dispositif électronique (100), dans lequel le dispositif électronique comprend :

une unité d'obtention d'informations (1710), configurée pour obtenir des informations de fond de photographie d'une première image, dans lequel la première image comprend une image de visage ;
une unité d'analyse d'image (1720), configurée pour reconnaître des informations de luminosité et des informations de maquillage d'un visage correspondant à l'image de visage dans la première image ; et

une unité de traitement d'image (1730), configurée pour réaliser, sur la base des informations de fond de photographie de la première image et des informations de luminosité et des informations de maquillage du visage correspondant à l'image de visage dans la première image, d'un traitement d'embellissement de la peau sur le visage correspondant à l'image de visage,

dans lequel l'unité d'obtention d'informations (1710), l'unité d'analyse d'image (1720) et l'unité de traitement d'image (1730) sont également configurées pour réaliser le procédé de traitement d'image selon l'une quelconque des revendications 1 à 7.

9. Système à puce, dans lequel le système à puce comprend :

un support de stockage, configuré pour stocker des instructions ; et
un circuit de traitement, configuré pour exécuter les instructions pour mettre en œuvre le procédé de traitement d'image selon l'une quelconque des revendications 1 à 7.

FIG. 1(a)

FIG. 1(b)

FIG. 1(c)

FIG. 1(d)

Electronic device 100

FIG. 2

FIG. 3

FIG. 4

FIG. 5

| Pooling layer \ Convolutional layer | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| 0 | X |   |   |   | X | X | X |   |   | X | X | X | X |   | X | X |
| 1 | X | X |   |   |   | X | X | X |   | X | X | X | X |   |   | X |
| 2 | X | X | X |   |   |   | X | X | X |   |   | X |   | X | X | X |
| 3 |   | X | X | X |   |   | X | X | X | X |   |   | X |   | X | X |
| 4 |   |   | X | X | X |   |   | X | X | X | X |   | X | X |   | X |
| 5 |   |   |   | X | X | X |   |   | X | X | X | X |   | X | X | X |

FIG. 6

FIG. 7(a1)

FIG. 7(b1)

FIG. 7(a2)

FIG. 7(b2)

FIG. 7(a3)

FIG. 7(b3)

FIG. 7(a4)

FIG. 7(b4)

11: 11

Wednesday, October 29

Operation 801

FIG. 8(a)

FIG. 8(b)

FIG. 8(c)

FIG. 8(d)

FIG. 8(e)

FIG. 8(f)

```
                                          ┌─ S401                              ┌─ S403
                              ┌──────────────────────────┐    ┌──────────────────────────┐
                              │  A mobile phone recognizes a │    │   The mobile phone performs,  │
                              │    first image, and obtains  │    │   based on the photographing  │
                              │   photographing background   │    │  background information of the│
                ┌─ S901       │  information of the first image │    │  first image and the brightness │
┌───────────┐  ┌─────────────┐│                              │    │    information and the makeup   │
│           │  │The mobile phone││                            │    │  information that are of the face │
│First image│─▶│ determines a │├──▶└──────────────────────────┘    │ corresponding to the face image │
│           │  │ quantity of face │         ┌─ S402                │    in the first image, skin     │
└───────────┘  │ images included in │┌──────────────────────────┐ │  beautification processing on the │
               │  the first image │ │  The mobile phone recognizes │ │   face corresponding to the face  │
               └─────────────┘ │  brightness information and  │ │            image           │
                              └──▶│ makeup information that are of │─▶└──────────────────────────┘
                                 │  a face corresponding to a face │
                                 │   image in the first image   │
                                 └──────────────────────────┘
```

FIG. 9

Whether a face is included?

Yes

No

Classifier

FIG. 10

First image →

**S901**
The mobile phone determines a quantity of face images included in the first image

→ **S401**
A mobile phone recognizes a first image, and obtains photographing background information of the first image

→ **S402**
The mobile phone recognizes brightness information and makeup information that are of a face corresponding to a face image in the first image

→ **S403**
The mobile phone performs, based on the photographing background information of the first image and the brightness information and the makeup information that are of the face corresponding to the face image in the first image, skin beautification processing on the face corresponding to the face image

The first image includes at least two face images

→ **S1101**
The mobile phone determines a relationship between persons corresponding to the at least two face images in the first image

→ **S1102**
The mobile phone adjusts a style of the first image based on the relationship between the persons corresponding to the at least two face images in the first image

FIG. 11

FIG. 12(a)

Style adjustment

FIG. 12(b)

FIG. 13(a)

Style adjustment

FIG. 13(b)

First image

The mobile phone determines a quantity of face images included in the first image  —— S901

S401

A mobile phone recognizes a first image, and obtains photographing background information of the first image

S402

The mobile phone recognizes brightness information and makeup information that are of a face corresponding to a face image in the first image

The first image includes at least two face images

S1101

The mobile phone determines a relationship between persons corresponding to the at least two face images in the first image

S1401

The mobile phone performs skin beautification processing on the face image based on the photographing background information of the first image, the brightness information of the face corresponding to the face image in the first image, the makeup information corresponding to the face image in the first image, and an adjusted style of the first image

S1102

The mobile phone adjusts a style of the first image based on the relationship between the persons corresponding to the at least two face images in the first image

FIG. 14

First image

The mobile phone
determines a
quantity of face
images included in
the first image

/ S901

A mobile phone recognizes
a first image, and obtains
photographing background
information of the first
image

/ S401

The mobile phone recognizes
brightness information and
makeup information that are
of a face corresponding to a
face image in the first image

/ S402

The mobile phone performs,
based on the photographing
background information of the
first image and the brightness
information and the makeup
information that are of the face
corresponding to the face image
in the first image, skin
beautification processing on the
face corresponding to the face
image

/ S403

The first image
includes at least
two face images

The mobile phone determines
a relationship between persons
corresponding to the at least
two face images in the first
image

/ S1101

The mobile phone adjusts a style
of the first image based on a first
image obtained after skin
beautification and the relationship
between the persons
corresponding to the at least two
face images

/ S1501

FIG. 15

First image → The mobile phone determines a quantity of face images included in the first image — 901

S401
A mobile phone recognizes a first image, and obtains photographing background information of the first image

S402
The mobile phone recognizes brightness information and makeup information that are of a face corresponding to a face image in the first image

The first image includes at least two face images

S1101
The mobile phone determines a relationship between persons corresponding to the at least two face images in the first image

S1601
The mobile phone adjusts a style of the first image and performs skin beautification processing on the face image based on the photographing background information of the first image, the brightness information of the face corresponding to the face image in the first image, the makeup information corresponding to the face image in the first image, and the relationship between the persons corresponding to the at least two face images

FIG. 16

EP 4 020 374 B1

Electronic device (100)

FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 108765352 A